# EUROPEAN PATENT SPECIFICATION

(11) **EP 2 721 332 B1**
(45) Date of publication and mention of the grant of the patent: **04.10.2017**
(21) Application number: 12790686.5
(22) Date of filing: 10.08.2012
(51) Int. Cl.: F16K 31/06

(54) **POPPET VALVE**
KEGELVENTIL
SOUPAPE-CHAMPIGNON

(43) Date of publication of application: 23.04.2014
(73) Proprietor: Mitsubishi Heavy Industries, Ltd., Tokyo 108-8215 (JP)
(72) Inventor: GREEN, Matthew, Midlothian Lothian EH20 9TB (GB); STEIN, Uwe, Midlothian Lothian EH20 9TB (GB); EILERS, Jens, Midlothian Lothian EH20 9TB (GB); LAVENDER, Jack, Midlothian Lothian EH20 9TB (GB)
(74) Representative: Alistair Hindle Associates Limited
(86) International application number: PCT/JP2012/005106
(87) International publication number: WO 2014/024232

(56) References cited:
- EP-A1- 0 728 971
- WO-A1-2006/015790
- DE-A1- 3 823 569

## Description

### Technical Field

The disclosure relates to a poppet valve, a fluid working machine comprising the poppet valve and a method of manufacturing a poppet valve.

### Background Art

Poppet valves employed between a working chamber and a high pressure manifold of a fluid working machine are typically assembled from a plurality of main valve parts: a lower encased portion comprising a valve seat and a poppet rod connected to the valve seat; an upper encased portion comprising a solenoid having a recess extending at least partly through it for receiving the poppet rod; a poppet guided by the poppet rod; and a biasing means such as a spring for biasing the poppet in an open or closed position.

Poppet valves in fluid working machines are typically required to open and close rapidly in the presence of significant pressure differentials. Accordingly, significant impact forces may be exerted by the poppet on the valve seat as the poppet moves to the valve closed position, and by the poppet on the solenoid as the poppet moves to the valve open position. These impact forces can cause damage to the solenoid, valve seat and/or the poppet which may lead to the valve having to be replaced.

At least one embodiment of the present invention aims to address the technical problem of how to improve the reliability of such poppet valves, particularly for use in fluid working machines which are difficult to access for maintenance purposes. DE 3823569 A1, WO 2006/015790 A1 and EP 0728971 A1 relate to solenoid actuated valves.

### Summary of the Invention

A first aspect of the invention provides a poppet valve comprising: at least one valve body comprising at least one valve seat; at least one poppet which is slidable on a poppet rod between a valve open position and a valve closed position, the poppet sealingly engaging the valve seat along one or more sealing lines at the valve closed position and the poppet being spaced from the valve seat at the valve open position; a biasing mechanism for biasing the poppet towards the valve open or valve closed position; and a solenoid for actuating movement of the poppet against the bias of the biasing mechanism, the solenoid being coupled to the valve body, wherein the poppet rod comprises a first end and a second end opposite the first end, the first end being rigidly mounted to the valve body such that it extends substantially perpendicularly from the valve body relative to a plane defined by at least one of said sealing line(s), the second end of the poppet rod not being rigidly mounted such that the perpendicularity of the rod is measurable prior to coupling the solenoid to the valve seat and the perpendicularity of the poppet rod is substantially unaffected by coupling and/or decoupling of the solenoid to and/or from the valve seat,
wherein the poppet comprises a sleeve and the poppet rod extends through at least part of the sleeve,
characterised in that a sliding movement of the poppet guided by the poppet rod is damped by a first damping mechanism between the poppet rod and the sleeve configured to be slidable on the poppet rod, wherein the first damping mechanism comprises a piston operable to reciprocate within a cavity comprising one or more damping channels such that, when the piston reciprocates within the cavity, hydraulic fluid is drawn into or expelled from the cavity via one or more of the one or more damping channels to damp the sliding movement of the poppet,
and said one or more damping channels include a first hole (or slot) provided at the sleeve,
and said first hole (or slot) is uncovered when the poppet is at an intermediate stage between the valve open position and the valve closed position, and said first hole (or slot) is covered when the poppet is in the valve open position or the valve closed position.

Because the second end of the poppet rod is not rigidly mounted when the valve is fully assembled, the process of coupling the solenoid to the valve body does not require any interaction between the second end of the poppet rod and any other components of the valve. Accordingly, the perpendicularity of the poppet rod is typically unaffected by mechanically coupling the solenoid to the valve body, and any perpendicularity measurement made prior to the coupling of these components will thus also be substantially unaffected. This is particularly important when the poppet rod perpendicularity must be kept within a narrow range to prevent damage of the poppet or engaging surfaces of the solenoid/valve seat which engage the poppet when it is in the valve open or valve closed positions respectively. For example, when the valve is used between a working chamber and high pressure manifold of a fluid working machine, the valve is required to open and/or close rapidly against fluid pressure differentials. Accordingly, the kinetic energy of the poppet during transition phases between the valve open and valve closed positions can be high. In order to prevent impact damage to the poppet and engaging surfaces of the solenoid and valve seat when the poppet reaches the valve open or valve closed positions, the poppet rod is preferably perpendicular to the plane defined by at least one of said sealing lines to within 0.3 degrees or less. Accordingly, the expected working lifetime of the valve is increased because the probability of impact damage between the poppet and the solenoid/valve seat is reduced.

In addition, because the perpendicularity of the poppet rod is more accurately controllable, valve wear will be more evenly distributed as the poppet moves between the valve open and valve closed positions. This also increases the expected working lifetime of the valve.

Extending the working lifetime of the valve minimises maintenance which is particularly important when the poppet valve is employed in a machine which is difficult to access, such as an offshore wind turbine.

The poppet typically comprises a solenoid engaging face which engages the solenoid when the poppet is in the valve open position. Typically, the solenoid engaging face forms part of a poppet armature which may be actuated by the solenoid. Preferably, the solenoid engaging face of the poppet comprises an anti-stiction disc which engages the solenoid.

The poppet typically comprises a seal opposite the solenoid engaging face which sealingly engages the valve seat when the poppet is in the valve closed position.

Typically, the seal is annular.

Typically the seal comprises one or more sealing ridges which sealingly engage(s) the valve seat when the valve is in the valve closed position. In this case, the sealing line(s) are defined by the engagement of apex(es) of the sealing ridge(s) with the valve seat.

Typically, one or more of the one or more sealing lines defines a plane which is co-planar or parallel to a plane comprising at least a portion of the valve seat.

In one embodiment, the valve seat substantially lies on a single valve seat plane. In this case, one or more of the one or more sealing lines preferably define a plane which is co-planar or substantially parallel to the valve seat plane.

The perpendicularity measurement of the poppet rod may be made relative to the valve seat or to a portion of the valve seat lying on a plane which is co-planar or parallel to the plane defined by said one of said sealing line(s). However, alternatively, the perpendicularity measurement may be made relative to, for example, the solenoid engaging face of the poppet which engages the solenoid at the valve open position. In this case, the solenoid engaging face typically lies on a plane which is parallel to the plane defined by the said one of said sealing line(s). Additionally or alternatively, the perpendicularity measurement of the poppet rod may be made relative to an engaging surface of the solenoid which engages the poppet at the valve open position. In this case, the engaging surface of the solenoid typically lies on a plane which is parallel to the plane defined by the said one of said sealing line(s).

At least a portion of the valve seat may form part of a body of a fluid working machine. Preferably, the entire valve seat forms part of the body of the fluid working machine.

The (or at least a portion of the) valve seat may form part of the body casting of the fluid working machine.

Preferably, the (or at least a portion of the) valve seat is integrally formed with a body of a fluid working machine.

Typically the solenoid is demountably coupled to the valve body. In this case, the perpendicularity of the poppet rod may be substantially unaffected by coupling and decoupling the solenoid to the valve body.

Typically the solenoid comprises a solenoid core and a solenoid coil, and the solenoid is actuated by energising the coil.

By a biasing mechanism we refer to a mechanism which provides a force which acts in a direction so as to urge the poppet towards the valve open or valve closed position (as appropriate).

The biasing mechanism may comprise a spring such as a coil spring which acts on the poppet. The force exerted by the biasing mechanism on the poppet is typically of sufficient magnitude to hold the poppet in the valve open or valve closed position, and to actuate movement of the poppet from the valve open position to the valve closed position (in the case where the biasing mechanism biases the poppet towards the valve closed position) or to actuate movement of the poppet from the valve closed position to the valve open position (in the case where the biasing mechanism biases the poppet towards the valve open position), when the solenoid is de-energised. Preferably, the force exerted by the biasing mechanism on the poppet is of sufficient magnitude to hold the poppet in the valve open or valve closed position, and to actuate movement of the poppet from the valve open position to the valve closed position (in the case where the biasing mechanism biases poppet towards the valve closed position) or to actuate movement of the poppet from the valve closed position to the valve open position (in the case where the biasing mechanism biases the poppet towards the valve open position) when the solenoid is de-energised, even in the presence of a small pressure differential (e.g. up to 2 bar, preferably up to 5 bar, even more preferably up to 10 bar) between a hydraulic fluid line coupled to a port provided in the poppet and a working chamber fluidly coupled to a port adjacent to the valve seat.

Preferably, the biasing mechanism biases the poppet towards the valve closed position. For example, the biasing mechanism may comprise a coil spring which is compressed between the poppet and the solenoid core such that the spring exerts expansion forces on both the solenoid core and the poppet. As the solenoid core remains stationary relative to the spring, the solenoid core exerts a reaction force on the spring which helps to bias the poppet towards the valve closed position. In this case, the poppet may be moved to the valve open position by energising the solenoid coil which draws (typically lifts) the poppet off the valve seat.

However, it will be understood that any suitable alternative biasing mechanism may be employed.

The valve may comprise a valve casing which houses the poppet, valve body and solenoid. The poppet is typically provided between the valve casing and the valve seat.

The solenoid may be provided in a first casing part which is demountably coupled to a second casing part comprising the valve body (and thus the valve seat). The poppet may be provided separately, or the poppet may be provided in the first casing part or the second casing part.

The valve may be provided as part of a cylinder assembly, the cylinder defining part of a working chamber of a fluid working machine. In this case, a port may be provided adjacent the valve seat which is coupled to a hydraulic fluid line in fluid communication with the working chamber of the cylinder and/or the poppet may comprise a port fluidly coupled to a hydraulic fluid line in fluid communication with a high pressure manifold.

The poppet typically comprises a poppet body extending between the solenoid engaging face and the annular seal. Typically a port for connecting the poppet to a high pressure hydraulic fluid line is provided in the poppet body.

Because the poppet rod is rigidly mounted to the valve body, the poppet rod is configured to remain stationary relative to the valve body when the valve is in use.

Typically, the valve seat is configured to remain stationary relative to the poppet rod when the valve is in use.

Typically, the valve seat comprises an annular valve seat member.

Preferably, the valve seat further comprises at least a portion of a central land provided in an annulus of the valve seat member and forming part of the valve body.

An annular port is typically provided between the said portion of the central land and the valve seat member.

Typically, the poppet comprises an annular seal which sealingly engages both the valve seat member and the central land when the poppet is in the valve closed position.

Typically, the annular seal comprises a first annular sealing ridge which sealingly engages the valve seat member along a first (typically annular) sealing line when the poppet is in the valve closed position and a second annular sealing ridge which sealingly engages the central land along a second (typically annular) sealing line when the poppet is in the valve closed position. The second sealing ridge (and thus the second sealing line) typically has a lower diameter than the first sealing ridge (and thus the first sealing line).

The said portion of the central land and the valve seat member may be substantially planar. The said portion of the central land and the valve seat member may be co-planar.

The planes defined by the first and second sealing lines may be co-planar.

In some embodiments, the valve seat member may be axially displaced from the said portion of the central land (i.e. displaced along the axis of movement of the poppet defined by the poppet rod). In this case, the first sealing line defines a first plane and the second sealing line defines a second plane axially displaced from the first plane. Thus, the first and second planes are also axially displaced. The first and second planes are typically parallel such that the poppet rod extends perpendicularly to both the first and second planes.

Annular poppet valves are typically suitable for use as high pressure valves in fluid working machines due to the large flow paths through the body that can be opened quickly. Accordingly, because these valves are often used in applications where the poppet is required to move rapidly, improving the accuracy with which poppet rod perpendicularity is known is particularly desirable for annular poppet valves.

Typically, the poppet rod is rigidly mounted to the central land.

The poppet rod may extend from the valve body into a sleeve of the poppet in order to guide the poppet between the valve open and valve closed positions.

Typically, the poppet rod does not extend fully between the valve body and the solenoid.

Typically, the length of the portion of the poppet rod received by the poppet sleeve is less than 80%, preferably less than 70%, more preferably less than 60%, even more preferably less than 50% of the shortest distance between the valve seat and a portion of the solenoid provided directly over (i.e. within an imaginary volume extending vertically upwards from an outer perimeter of the poppet rod) the poppet rod. By keeping the poppet rod as short as possible, the probability of the perpendicularity of the poppet rod being altered during valve assembly/operation is significantly reduced.

Preferably, a sliding movement of the poppet guided by the poppet rod is damped by a damping mechanism.

When the poppet valve is required to open and close rapidly, and/or against a pressure differential, the poppet has a high level of kinetic energy such that, when it engages the valve seat and/or the solenoid a correspondingly high level of energy needs to be dissipated by the poppet and the solenoid/valve seat. This can cause cracking of the poppet, solenoid or valve seat (or indeed other valve components) over time, even when the perpendicularity of the poppet rod is tightly controlled as explained above. By damping movement of the poppet, the impact forces between the poppet and the solenoid/valve seat can be reduced in order to reduce the probability of structural damage to the valve during its normal operation.

In one embodiment, the damping mechanism is provided between the poppet and the poppet rod and/or the valve body.

By providing the damping mechanism between the poppet and the poppet rod and/or the valve body, a compact valve arrangement can be achieved.

The damping mechanism may operate by pushing hydraulic fluid from between the poppet and the poppet rod and/or the valve body through one or more damping channels, the damping channel(s) restricting the flow of hydraulic fluid which causes the sliding movement of the poppet along the poppet rod to be damped.

The restriction provided by the damping channel causes a damping effect on the sliding movement of the poppet guided by the poppet rod by the reaction force exerted (ultimately on the poppet) by the hydraulic fluid whose flow is restricted.

The width of the damping channel(s) may be selected to provide the required level of damping.

The poppet rod and the poppet may form part of the damping mechanism.

The hydraulic fluid may, for example, be pushed from a cavity provided between an interior surface of the poppet and the poppet rod and/or the valve body through one or more damping channels.

Preferably, the damping mechanism is operable to increase the level of damping applied to the movement of the poppet when it is approaching the valve (fully) open position (where the poppet engages the solenoid) and/or when it is approaching the valve closed position (where the poppet sealingly engages the valve seat).

Preferably, the damping applied to the poppet may be increased during the final 30% of a sliding path along which it is guided by the poppet rod between the valve open and valve closed positions and/or during the final 30% of a sliding path along which it is guided by the poppet rod between the valve closed and valve open positions. Preferably, the level of damping applied to the poppet in the final 30% of travel between the valve open and closed positions increases by at least 50% compared to the level of damping applied when the poppet is midway between the valve open position and the valve closed position.

By increasing the level of damping applied to the poppet when the poppet is approaching the valve open and/or valve closed positions, a much lower (preferably negligible) level of damping can be applied to the poppet before it reaches the final stages of travel between the two positions. This allows the poppet to open and close rapidly despite the damping applied by the damping mechanism.

In one embodiment, the damping mechanism comprises a first interlocking formation configured to interlock with a second interlocking formation when the poppet is in the valve closed position, the second interlocking formation being provided on the poppet rod and/or the valve body, the damping mechanism being operable to damp the sliding movement of the poppet guided by the poppet rod by pushing hydraulic fluid from between the first and second interlocking formations through the damping channel(s).

The first interlocking formation may be a discrete component. In this case, the first interlocking formation is typically slidably mounted to the poppet rod and typically not connected to or integrally formed with the poppet or valve body. Alternatively, the first interlocking formation may, for example, be connected to, or integrally formed with, the poppet.

When the first interlocking formation is a discrete component, the first interlocking formation may be arranged to be engagable with the sleeve and/or an internal surface of the poppet such that when the poppet moves towards the valve closed position it engages the first interlocking formation and urges it towards the second interlocking formation.

In one embodiment, the damping mechanism further comprises a biasing mechanism arranged to bias the first interlocking formation away from the second interlocking formation.

Preferably the biasing mechanism is resilient.

Typically, the biasing mechanism and first interlocking formation are arranged such that, when the first interlocking formation is urged towards the second interlocking formation by the poppet sleeve/internal surface of the poppet, the first interlocking formation is urged towards the second interlocking formation against the bias of the biasing mechanism of the damping mechanism. The biasing mechanism and first interlocking mechanism are typically configured such that when the poppet moves from the valve closed position to the valve open position, the first interlocking formation moves away from the second interlocking formation under the action of the biasing mechanism.

The damping mechanism may further comprise an end stop, which may for example be provided on the poppet rod, the first interlocking formation and the end stop being together arranged such that the first interlocking formation engages the end stop as the poppet moves from the valve closed to the valve open position, the end stop preventing further movement of the first interlocking formation away from the second interlocking formation. Preferably, the first and second interlocking formations do not interlock when the first interlocking formation engages the end stop.

Typically, if an interlocking formation is provided on the valve body, it will be provided on a or the central land of the valve body provided in an or the annulus of a or the valve seat member.

Optionally, the damping mechanism may further comprise a third interlocking formation configured to interlock with a fourth interlocking formation when the poppet is in the valve open position, the fourth interlocking formation being provided on the poppet rod and/or the solenoid, the damping mechanism being operable to damp the sliding movement of the poppet guided by the poppet rod by pushing hydraulic fluid from between the third and fourth interlocking formations through one or more of the damping channel(s).

One or more damping channels may be provided between the first and second and/or third and fourth interlocking formations.

One or more of the damping channel(s) may be transient. That is, one or more of the damping channel(s) may be formed (or may be narrowed) for only part of the movement of the poppet from the valve open and the valve closed position. Additionally or alternatively, one or more of the damping channels between the poppet and the poppet rod/valve body may remain the same width at all positions of the poppet between the valve open and valve closed positions.

Additionally or alternatively, one or more damping channels may extend through the first and/or second interlocking formations and/or through the third and/or fourth interlocking formations.

In one embodiment, the poppet rod has a stepped flange and the poppet has an interlocking formation shaped to interlock with the stepped flange on the poppet rod, wherein the damping mechanism is operable to damp sliding movement of the poppet guided by the poppet rod by pushing hydraulic fluid through the damping channel(s), one or more of the damping channel(s) being provided between the interlocking formation on the poppet and the stepped flange on the poppet rod.

In another embodiment, the valve body has a stepped flange and the poppet has an interlocking formation shaped to interlock with the stepped flange on the valve body, wherein the damping mechanism is operable to damp sliding movement of the poppet guided by the poppet rod by pushing hydraulic fluid through the damping channel(s), one or more of the damping channel(s) being provided between the interlocking formation on the poppet and the stepped flange on the valve body.

Alternatively, part of the stepped flange may be provided by the poppet rod and part of the stepped flange may be provided by the valve body.

Additionally or alternatively, one or more of the damping channel(s) may extend through the stepped flange and/or interlocking formation.

It will be understood that the stepped flange and/or interlocking formation may, but need not, have squared off edges. In one embodiment, the stepped flange and/or interlocking formation may have rounded edges.

Additionally or alternatively, a sliding movement of the poppet guided by the poppet rod may be damped by a damping mechanism between the poppet and a valve casing in which the valve is housed.

In one embodiment, the valve casing and/or the poppet comprise one or more projections arranged to form a damping channel between the valve casing and the poppet, the damping channel providing a restriction to the flow of hydraulic fluid, wherein the damping mechanism is operable to damp the sliding movement of the poppet guided by the poppet rod by pushing hydraulic fluid from between the poppet and the valve casing through the damping channel.

Typically, the one or more projections are arranged such that, during the poppet valve opening and/or closing, the poppet is damped as it approaches the solenoid and/ or the valve seat respectively, requiring escape of hydraulic fluid through the damping channel between the poppet and the valve casing.

Preferably, the damping channel is only formed (or is narrowed) for part of a sliding path along which the poppet is guided by the poppet rod between the valve open and valve closed positions. More preferably, the damping channel is only formed (or is narrowed) during the final 30% of a sliding path along which the poppet is guided by the poppet rod between the valve open and valve closed positions and/or during the final 30% of a sliding path along which the poppet is guided by the poppet rod between the valve closed and valve open positions. Preferably, the level of damping applied to the poppet in the final 30% of travel between the valve open and closed positions increases by at least 50% compared to the level of damping applied when the poppet is midway between the valve open position and the valve closed position as a result of the forming (or narrowing) of the damping channel.

Preferably, the valve casing and/or the poppet further comprise one or more recesses arranged to increase the width of the damping channel at an intermediate position of the poppet between the valve open and valve closed positions, thereby decreasing the level of damping provided by the damping channel at said intermediate position. This helps to increase the speed of the valve at the intermediate position, where there are typically no impact forces to dissipate. This allows the valve to be used in applications (e.g. high pressure valve for a fluid working machine) where the valve is required to open and close quickly.

In one embodiment, the poppet comprises a sleeve and the poppet rod extends through at least part of the sleeve, and wherein a sliding movement of the poppet guided by the poppet rod is damped by a damping mechanism between the poppet rod and the sleeve.

In this case, the damping mechanism may comprise a piston operable to reciprocate within a cavity comprising one or more damping channels such that, when the piston reciprocates within the cavity, hydraulic fluid is drawn into or expelled from the cavity via one or more of the one or more damping channels to damp the sliding movement of the poppet.

Typically, a plurality of damping channels is provided, hydraulic fluid being expelled from one or more of the plurality of damping channels on one side of the piston and hydraulic fluid being drawn into the cavity via another one or more of the plurality of damping channels on an opposite side of the piston.

The piston may reciprocate within the cavity due to movement of the cavity relative to the piston or vice versa.

In one embodiment, the piston comprises one or more projections extending from the poppet rod.

In one embodiment, one or more free moving holes may be provided in fluid communication with the cavity through which hydraulic fluid can flow during an intermediate stage in the path of the poppet between the valve open and closed positions (i.e. mid-stroke) such that the level of damping provided by the damping mechanism decreases at said intermediate stage. This increases the speed at which the valve moves during the intermediate stage and thus reduces the time taken for the valve to open and close.

Preferably, the free moving holes are at least partially blocked by the piston when the poppet approaches the valve open and/or valve closed positions so as to increase the level of damping applied to the movement of the poppet as the poppet approaches the valve open and/or valve closed positions.

Additionally or alternatively, one or more damping channels may be at least partially blocked by the piston when the poppet approaches the valve open and/or valve closed positions so as to increase the level of damping applied to the movement of the poppet as the poppet approaches the valve open and/or valve closed positions.

Typically, the cavity is provided within the sleeve.

Preferably, the one or more damping channels and the piston are arranged to increase the level of damping applied to the sliding movement of the poppet as it approaches the solenoid and/or the valve seat as the poppet moves from the valve closed position to the valve open position and/or from the valve open position to the valve closed position respectively. This allows the poppet to move quickly between the valve open and valve closed positions, but increased damping near the valve open and closed positions restricts the impact force which will be felt by the poppet, solenoid and valve seat when the poppet reaches the valve open or valve closed positions. This helps to increase the working lifetime of the valve.

The invention also extends to a fluid working machine comprising the poppet valve according to the first aspect of the invention. In a second aspect of the invention there is provided a wind turbine generator comprising: a hub on which a blade is mounted; a main shaft which is connected to the hub; a hydraulic pump which is attached to the main shaft; a hydraulic motor which is driven by pressurized oil supplied from the hydraulic pump; and a generator which is coupled to the hydraulic motor, wherein at least one of the hydraulic pump and the hydraulic generator is a fluid working machine comprising a poppet valve according to the first aspect of the invention.

The fluid working machine typically comprises at least a working chamber of cyclically varying volume and a fluid manifold. A poppet valve according to the first aspect of the invention is typically interspersed between the working chamber and the fluid manifold to regulate the flow of fluid between the working chamber and the fluid manifold.

Preferably, the fluid working machine further comprises a controller which is operable to actively control the said valve by regulating an electrical current through the solenoid, and optionally one or more other valves, in phased relation to cycles of working chamber volume, to determine the net displacement of the fluid by the or each working chamber on a cycle by cycle basis, to thereby determine the time averaged net displacement of fluid by the working machine or one of more groups of said working chambers.

The fluid working machine may comprise both a high pressure manifold and a low pressure manifold, and a valve according to the first aspect of the present invention may regulate the flow of fluid between the working chamber and the high pressure manifold and/or between the working chamber and the low pressure manifold.

Within this description and the appended claims, the terms "high pressure manifold" and "low pressure manifold" refer to manifolds with higher and lower pressures relative to each other. The pressure difference between the high and low pressure manifolds, and the absolute values of the pressure in the high and low pressure manifolds will depend on the application. A fluid working machine may have more than one low pressure manifold and may have more than one high pressure manifold.

The solenoid is preferably energisable to move the poppet between the valve open and valve closed positions against a pressure differential across the poppet between a high pressure hydraulic fluid line coupled to a port provided in the poppet and a working chamber fluidly coupled to a port adjacent to the valve seat.

Preferably, the biasing mechanism is operable to move the poppet between the valve open and valve closed positions against a pressure differential across the poppet between a high pressure hydraulic fluid line coupled to a port provided in the poppet and a working chamber fluidly coupled to a port adjacent to the valve seat when the solenoid is non-energized.

The working chamber may be fluidly coupled to a low pressure hydraulic fluid line via a low pressure valve.

Preferably, during closure of the low pressure valve, a cylinder pressure can be increased.

A related art provides a method of manufacturing a poppet valve, the method comprising: providing a valve body comprising a valve seat; providing a poppet rod having a first end rigidly mounted to the valve body and a second end opposite the first end which is not rigidly mounted; fitting a poppet over the poppet rod such that the poppet is slidable on the poppet rod between a valve open position and a valve closed position, the poppet sealingly engaging the valve seat along one or more sealing lines at the valve closed position and the poppet being spaced from the valve seat at the valve open position; measuring a perpendicularity of the poppet rod relative to a plane defined by one or more said sealing lines; and coupling a solenoid to the valve body without substantially affecting the perpendicularity of the poppet rod relative to the said plane.

In one embodiment, the step of providing a poppet rod having a first end rigidly mounted to the valve body and a second end which is not rigidly mounted comprises: hardening a surface of the valve seat to improve its durability against impact from a poppet; preventing hardening, or removing a hardened portion, of a mounting region of the valve body; and rigidly mounting a first end of a poppet rod to the mounting region, but not rigidly mounting a second end of the poppet rod opposite the first end.

It is typically necessary to harden the portion of the valve seat which engages the poppet to increase the expected lifetime of the valve. However, as explained above, it is beneficial to rigidly mount a first end of the poppet rod to the valve body (but not to rigidly mount the second end of the poppet rod) so that the perpendicularity of the poppet rod relative to a plane defined by at least one sealing line along which a poppet sealingly engages the valve seat (when the poppet is in a valve closed position) is typically unaffected by a subsequent valve assembly process, and it may be difficult to rigidly mount the poppet rod to the valve body if the mounting region of the valve body is hardened. Accordingly, it is beneficial to either prevent hardening of a portion of, or remove a hardened portion of, the valve body prior to rigidly mounting the first end of the rod to the valve body.

Hardening of the valve seat is typically achieved by applying a hardening agent to the valve seat.

The step of preventing hardening of a mounting region of the valve body may comprise shielding said mounting region while hardening said surface of the valve seat.

Alternatively, the mounting region of the valve body may comprise a raised portion, the method comprising hardening the raised portion of the mounting region while hardening the surface of the valve seat, removing the hardened raised portion of the mounting region and rigidly mounting the first end of the poppet rod to a remaining portion of the mounting region.

The remaining portion of the mounting region is typically flush with the valve seat.

In an alternative embodiment, the step of providing a poppet rod having a first end rigidly mounted to the valve body and a second end which is not rigidly mounted comprises: integrally forming a poppet rod with the valve body such that a first end of the poppet rod is rigidly mounted to the valve body and a second end of the poppet rod opposite the first end is not rigidly mounted.

Integrally forming a poppet rod with the valve body may comprise machining a poppet rod from the valve body.

It will be understood that the steps of the method need not be performed in the order provided above. Indeed, the said perpendicularity measurement is typically made prior to fitting the poppet over the poppet rod.

Preferably the solenoid is demountably coupled to the valve body.

Typically the solenoid is provided in a first casing part and the valve body is provided in a second casing part, the step of coupling the solenoid to the valve body comprising coupling the first casing part to the second casing part. In this case, the first casing part and the second casing part typically together encompass the poppet rod.

In one embodiment, the first casing part and the second casing part have matable threads. In this case, the step of coupling the first casing part to the second casing part may comprise screwing the first casing part to the second casing part.

Typically, when the solenoid is coupled to the valve body, the poppet rod is blocked from view.

### Brief Description of Drawings

An example embodiment of the present invention will now be illustrated with reference to the following Figures in which:
[fig.1]Figure 1 is a schematic diagram of a wind turbine according to an embodiment of the present invention;
[fig.2]Figure 2 is a schematic diagram of a hydraulic pump or motor of the wind turbine of Figure 1;
[fig.3]Figure 3 illustrates a motoring cycle of a motor of the wind turbine of Figure 1;
[fig.4]Figure 4 is a sectional view through a high pressure poppet valve which may be used in the pump and/or motor of Figures 1, 2;

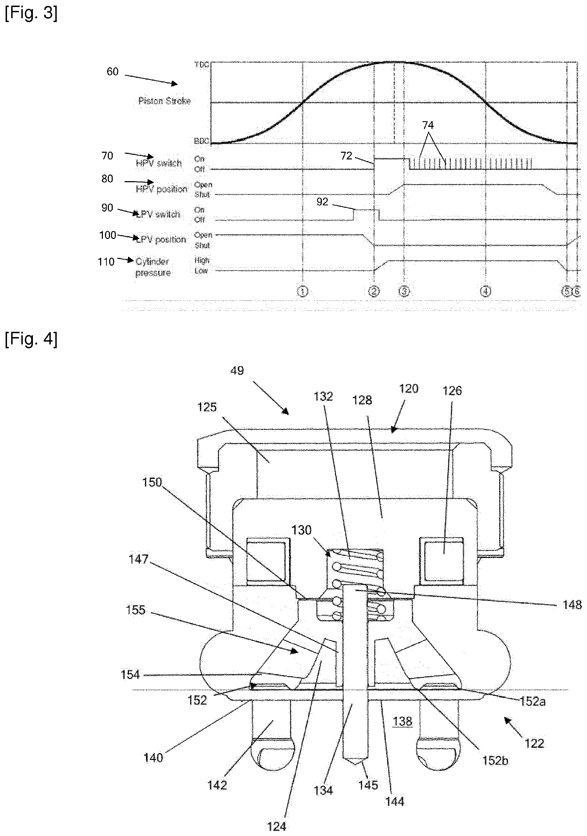

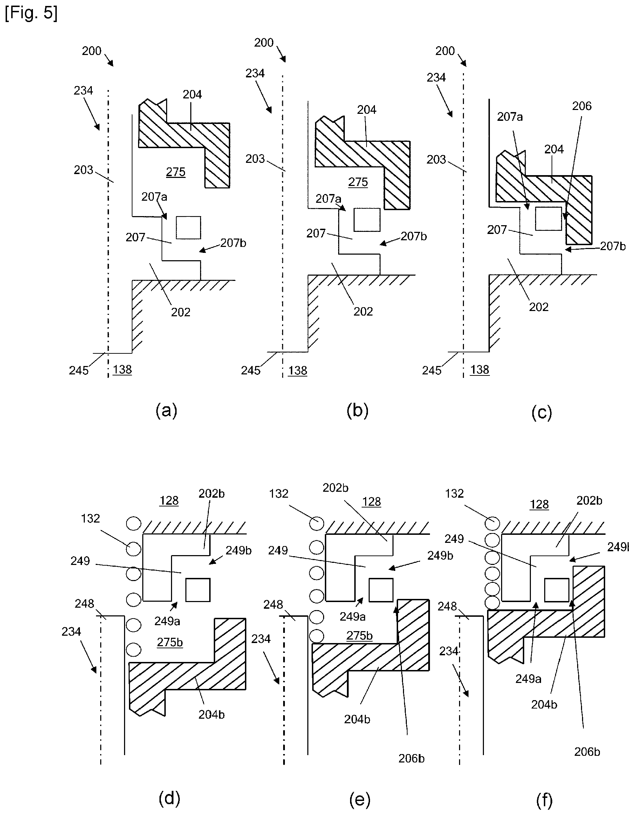

[fig.5]Figures 5(a), 5(b) and 5(c) are sectional views through a damping mechanism of a high pressure poppet valve similar to that shown in Figure 4 for damping movement of the poppet from the valve open to the valve closed position, Figure 5(a) shows the damping mechanism in the valve open position, Figure 5(b) shows the damping mechanism in an intermediate position between the valve open and valve closed positions and Figure 5(c) shows the damping mechanism in the valve closed position;Figures 5(d), 5(e) and 5(f) are sectional views through a similar damping mechanism to that shown in Figures 5(a), 5(b) and 5(c) but for damping movement of the poppet from the valve closed to the valve open position, Figure 5(d) shows the damping mechanism in the valve closed position, Figure 5(e) shows the damping mechanism in an intermediate position between the valve closed and valve open positions and Figure 5(f) shows the damping mechanism in the valve open position;
[fig.6]Figure 6 is a sectional close-up view through an alternative damping mechanism to the one shown in Figures 5(a)-5(c);
[fig.7]Figures 7(a)-7(c) are sectional views through alternative high pressure poppet valves similar to that shown in Figure 4 but with damping mechanisms between the valve casing and the poppet;
[fig.8]Figure 8 is a sectional view through a portion of another alternative high pressure poppet valve comprising a dashpot damping mechanism;

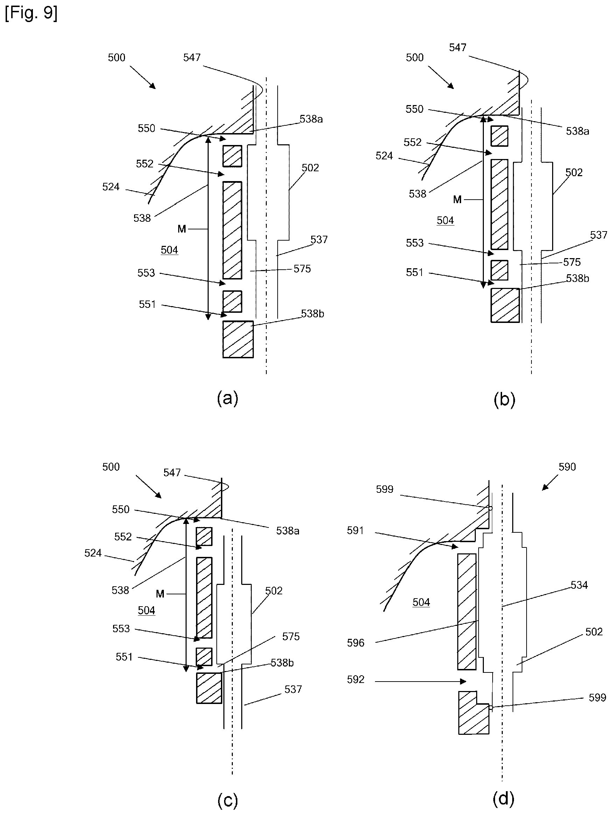

[fig.9]Figures 9(a)-9(c) are sectional views through yet another alternative high pressure poppet valve having a damping mechanism comprising a piston reciprocating within a cavity, Figure 9(a) showing the damping mechanism in the valve closed position, Figure 9(b) showing the damping mechanism in an intermediate position between the valve closed position and the valve open position and Figure 9(c) showing the damping mechanism in the valve open position; Figure 9(d) is a sectional view of the high pressure poppet valve of Figures 9(a)-9(c) with a modified damping mechanism, the poppet valve being shown in the valve closed position;
[fig.10]Figures 10(a) and 10(b) are sectional views showing halves of alternative high poppet pressure valves adapted to reduce shear losses, the valves being shown in their valve closed positions;
[fig.11]Figures 11(a)-11(d) illustrate a method of manufacturing the high pressure valve of Figure 4; and
[fig.12]Figures 12(a)-12(d) illustrate an alternative method of manufacturing the high pressure valve of Figure 4.

### Description of Embodiments

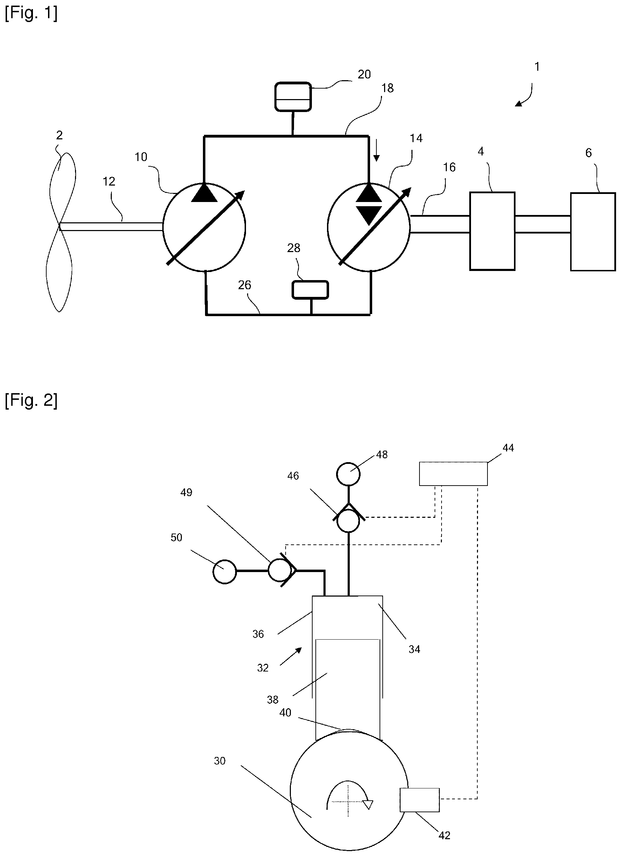

Figure 1 schematically illustrates a wind turbine 1 comprising a variable-pitch turbine 2 and a synchronous electrical generator 4. The electrical generator 4 is connected to a 3-phase grid 6 (typically operating at 50 Hz or 60 Hz). Wind energy from the turbine 2 is transmitted to the electrical generator 4 through a hydraulic transmission. The hydraulic transmission includes a variable-displacement hydraulic pump 10 drivably connected to the turbine by a driveshaft 12, and a variable-displacement hydraulic motor 14 connected to the rotor of the electrical generator by a further drive shaft 16. Further details of the variable-displacement hydraulic pump 10 and motor 14 are discussed below.

A pressurised fluid manifold 18 (functioning as the high-pressure transmission manifold) extends from the outlet of the hydraulic pump to the inlet of the hydraulic motor. In some embodiments, it extends to the inlet of a plurality of hydraulic motors, connected in parallel, each of which may independently drive a separate generator. The pressurised fluid manifold 18 is also in communication, through a port, with an oleopneumatic accumulator 20, which functions as a reservoir for working fluid. The oleopneumatic accumulator is precharged with a relatively high pressure of inert gas, usually at least 100 bar, and further pressurised inert gas may also be held in gas bottles fluidically connected thereto. The pump 10 and motor 14 are also coupled to a low pressure manifold 26 via respective low pressure valves (not shown). The low pressure manifold also extends to a reservoir tank or low pressure accumulator 28 for hydraulic working fluid and functions in use to direct working fluid from the outlet of the hydraulic motor(s) to the inlet of the hydraulic pump.

### (Hydraulic Pump and Motor: Principles of Operation)

Figure 2 is a schematic diagram of a cylinder assembly of the pump 10 and/or motor 14 comprising an eccentric cam 30 disposed on a crankshaft (not shown) driving (or, in the case of a motor, being driven by) a piston cylinder device 32. Although only one cam 30 and one piston cylinder device 32 are shown in Figure 2, it will be understood that other cams and piston cylinder devices would typically be provided.

The piston cylinder device 32 comprises a working chamber 34 having a volume defined by the interior surface of a cylinder 36 and a piston 38 which reciprocates within the cylinder 36 to cyclically vary the volume of the working chamber. The piston 38 is driven by (or, when the machine is operating as a motor, drives) the eccentric cam 30 and thus the crankshaft on which it is disposed. The piston 38 has a foot 40 shaped to engage the eccentric cam 30 such that forces can be transmitted between the crankshaft and the piston 38 via the foot 40.

A shaft position and speed sensor 42 determines the instantaneous angular position and speed of rotation of the shaft, and transmits shaft position and speed signals to a machine controller 44, which enables the controller to determine the instantaneous phase of the cycles of each individual working chamber. The machine controller 44 typically comprises a processor, such as a microcontroller, which executes a stored program in use.

The piston cylinder device 32 further comprises an actively controlled low pressure valve 46 in the form of an electronically controllable face-sealing poppet valve, which faces inwards toward the working chamber 34 and is operable to selectively seal off a channel extending from the working chamber 34 to a low pressure manifold 48, which is in communication with the main low pressure manifold through an inlet or outlet of the hydraulic pump or motor respectively. The working chamber 34 further comprises a high pressure valve 49. The high pressure valve 49 faces outwards from the working chamber 34 and is operable to seal off a channel extending from the working chamber 34 to a high pressure manifold 50 which is in communication with the pressurised fluid manifold 18 through an outlet or inlet of the fluid pump 10 or motor 14 respectively.

The low and high pressure valves 46, 49 are actively controlled by the controller 44. The low pressure valve 46 is typically biased towards an open position and may be switched between open and closed positions by the controller 44. The high pressure valve is typically biased towards a closed position, and may be switched between open and closed positions by the controller 44. However, it will be understood that the low pressure valve 46 may alternatively be biased to a closed position, while the high pressure valve 49 may alternatively be biased to an open position. The high pressure valve 49 is described in more detail later.

The hydraulic pump 10 and hydraulic motor 14 may carry out only pumping or motoring cycles respectively. However, either or both devices may be a pump-motor which can operate as a pump or a motor in alternative operating modes and can thereby carry out pumping or motoring cycles.

A full stroke motoring cycle, such as is carried out by the hydraulic motor 14 in use, is described with reference to Figure 3. Figure 3 describes six stages of the motoring cycle by means of the following plots: piston stroke position vs. time 60; high pressure valve control signal vs. time 70; high pressure valve position vs. time 80; low pressure valve control signal vs. time 90; low pressure valve position vs. time 100; and working chamber pressure vs. time 110. The respective six stages are identified by numbers 1-6 in Figure 3.

During a contraction stroke (stage 1), the piston 38 reciprocates within the cylinder, moving from bottom dead centre (BDC) towards top dead centre (TDC). During this stage, the low pressure valve 46 is open while the high pressure valve 49 is closed. Fluid is vented to the low pressure manifold 48 through the low pressure valve 46 due to the reduction in volume of the working chamber 34 as the piston moves further into the cylinder.

In a second stage (stage 2), a first switching signal 92 is sent by the controller 44 to the low pressure valve 46 shortly before the piston 38 reaches TDC. This first switching signal 92 causes the low pressure valve 46 to close before the piston has reached TDC, causing pressure to build up within the working chamber 34 as it continues to reduce in volume.

When the low pressure valve 46 is fully closed, a second switching signal 72 is sent to the high pressure valve 49 by the controller 44. By the time the high pressure valve 49 reacts to the second switching signal 72, sufficient pressure has been built up in the working chamber 34 for the high pressure valve 49 to open in response to the second switching signal. Thus, at stage 3, the high pressure valve 49 opens (shortly after TDC) and fluid flows into the working chamber 34 from the high pressure manifold 50. This high pressure fluid drives the piston 38 out of the cylinder 36 causing the crankshaft to be rotated via the piston foot 40 and the eccentric cam 30.

As the piston 38 moves back towards BDC, the high pressure valve 49 is kept open by electrical pulses 74 (stage 4) provided by the controller 44. Shortly before BDC, the electrical pulses 74 are stopped, and the closing bias of the high pressure valve 49 causes the high pressure valve 49 to close. At this point, the pressure in working chamber 34 drops because its volume is still increasing as the piston has not yet reached BDC and it is no longer connected to the high pressure manifold 50. When the piston 38 reaches BDC (stage 5), the working chamber pressure drops sufficiently for the opening bias of the low pressure valve 46 to overcome the pressure differential between the low pressure manifold 48 and the working chamber 34, and the low pressure valve 46 opens (stage 6).

The cycle may then be repeated as the piston moves 38 from BDC to TDC.

A variant of this cycle may be employed to achieve pumping, such as the cycle described in EP 0 361 927. During an expansion stoke of a working chamber 34, the low pressure valve 46 is open and hydraulic fluid is received from the low pressure manifold 48. At or around BDC, the controller 44 determines whether or not the low pressure valve 46 should be closed. If the low pressure valve 46 is closed, working fluid within the working chamber 34 is pressurized by the movement of the piston 38 (which is driven by the crankshaft via piston foot 40) into the cylinder 36 and vented to the high pressure valve 49 during the subsequent contraction phase of working chamber volume, so that a pumping cycle occurs and a volume of fluid is displaced to the high pressure manifold. The low pressure valve 46 then opens again at or shortly after top dead centre. If the low pressure valve remains open, working fluid within the working chamber is vented back to the low pressure manifold 48 and an idle cycle occurs, in which there is no net displacement of fluid to the high pressure manifold 50.

In some embodiments, instead of selecting only between idle cycles and full stroke pumping and/or motoring cycles, the machine controller 44 is also operable to vary the precise phasing of valve timings to create partial stroke pumping and/or partial stroke motoring cycles.

In a partial stroke pumping cycle, the low pressure valve 46 is closed later in the exhaust stroke so that only a part of the maximum stroke volume of the working chamber 34 is displaced into the high pressure manifold 50. Typically, closure of the low pressure valve 46 is delayed until just before top dead centre.

In a partial stroke motoring cycle, the high pressure valve 49 is closed and the low pressure valve 46 opened part way through the expansion stroke so that the volume of fluid received from the high pressure manifold 50 and thus the net displacement of fluid is less than would otherwise be possible.

It may be that the controller of the hydraulic pump 10 and/or the controller of the hydraulic motor 14 are remote from the hydraulic pump 10 and the hydraulic motor 14. For example, a single centralised controller may be employed to control both the motor 14 and the pump 10. However, typically, the hydraulic pump 10 and the hydraulic motor 14 have separate controllers.

### (High Pressure Valve)

Figure 4 shows a close-up schematic sectional view of the high pressure valve 49. High pressure valve 49 comprises: a first encased part 120 demountably coupled to a second encased part 122; a poppet 124 provided between the first and second encased parts 120, 122; and a coil spring 132 provided between the first encased part 120 and the poppet 124. First encased part 120 comprises a first casing 125 which retains a solenoid coil 126 wound inside a solenoid core 128. Second encased part 122 comprises a second casing which retains a valve body 138. The valve body 138 comprises an annular valve seat member 140 provided around an annular port 142 and a central land 144 provided in the annulus of the port 142. Annular port 142 is typically an inlet fluidly coupled to the working chamber 34 of the fluid working machine (pump 10 and/or motor 14) described above.

The second casing is typically part of the body casting of the fluid working machine (the pump 10 or motor 14 described above). Typically the second casing is integrally formed with the body casting of the fluid working machine.

A poppet rod 134, which has a proximal end 145 rigidly mounted to the central land 144, is provided to guide movement of the poppet 124. The poppet rod 134 may be formed separately from the central land 144 and subsequently attached to the central land 144. Alternatively, the poppet rod 134 may be integrally formed with the central land 144. The poppet 124 comprises a sleeve 147 through which the poppet rod 134 extends from the central land 144. The poppet 124 is slidable along the poppet rod 134 which guides the poppet 124 between a valve open position (shown in Figure 4), where an (upper) annular solenoid engaging face 150 of the poppet 124 (which typically forms part of a poppet armature) engages the solenoid core 128, and a valve closed position where an annular seal 152 of the poppet 124 sealingly engages a valve seat comprising the valve seat member 140 and a radially outer portion of the central land 144 so as to prevent the flow of fluid through the annular inlet 142. The annular seal 152 comprises a first annular ridge 152a which sealingly engages the valve seat member 140 along a first annular sealing line and a second annular ridge 152b which sealingly engages the (said radially outer portion of the) central land 144 along a second annular sealing line when the poppet 124 is in the valve closed position, the first annular ridge 152a having a larger diameter than the second annular ridge 152b. The first sealing line defines a first plane (indicated by a dotted line in Figure 4) and the second sealing line defines a second plane. In this exemplary embodiment, the first and second planes are co-planar. As discussed below, the poppet rod 134 has a distal end 148 which is not rigidly mounted, such that the poppet rod 124 is cantilevered to the central land 144 of the valve body 138.

The poppet rod 134 extends from the central land 144 substantially perpendicularly relative to the plane defined by the first and second sealing lines. Typically, the poppet rod 134 extends through the full length of the poppet sleeve 147, but not fully between the central land 144 and the solenoid core 128. Typically, the length of the portion of the poppet rod 134 received by the poppet sleeve 147 is less than 80%, preferably less than 70%, more preferably less than 60%, even more preferably less than 50% of the shortest distance between the central land 144 and a portion of the solenoid core 128 provided directly over (i.e. within an imaginary volume extending vertically upwards from an outer perimeter of the poppet rod 134) the distal end 148 of the poppet rod 134. By keeping the poppet rod as short as possible, the probability of the perpendicularity of the poppet rod being altered during valve assembly, for example when the first casing part is coupled to the second casing part, is significantly reduced.

The poppet 124 further comprises a poppet body 154 which tapers between the solenoid engaging face 150 and the first annular ridge 152a of the annular seal 152 (the solenoid engaging face 150 having a smaller diameter than the first annular ridge 152a of the annular seal 152), the poppet body 154 comprising a high pressure port 155 at an intermediate position between the solenoid engaging face 150 and the annular seal 152 for connecting the valve 49 to the high pressure manifold 50.

The solenoid core 128 comprises a recess 130 for housing the spring 132 such that a first end of the spring 132 engages the solenoid core 128 and a second end of the spring 132 engages the poppet 124. The spring 132 is compressed such that it exerts expansion forces on both the solenoid core 128 and the poppet 124. As the solenoid core 128 remains stationary relative to the spring, the solenoid core 128 exerts a reaction force on the spring 132 which helps to bias the poppet 124 towards the valve closed position. When the solenoid coil 126 is energised, the poppet 124 is electromagnetically attracted towards the solenoid core 128, overcoming the biasing force of the spring 132 and causing the poppet 124 to slide along the poppet rod from the valve closed position to the valve open position.

In the valve open position, hydraulic fluid can flow between the working chamber 34 and the high pressure manifold 50 via ports 142, 155.

The spring 132 is typically selected such that, when the solenoid coil 126 is de-energised, the expansion forces exerted by the spring 132 on the solenoid core 128 and the poppet 124 (and the corresponding reaction force exerted by the solenoid core 128 on the spring 132, which is transmitted to the poppet 124 through the spring 132) are of sufficient magnitude to actuate movement of the poppet 124 into the valve closed position, even when there is a small pressure differential (e.g. up to 2 bar, preferably up to 5 bar, more preferably up to 10 bar) between ports 142, 155.

The high pressure valve 49 is required to open rapidly during use, and typically against a relatively small pressure differential (e.g. up to 2 bar, preferably up to 5 bar, more preferably up to 10 bar) between the working chamber 34 and the high pressure manifold 50. The speed at which the high pressure valve 49 is required to open or close is dependent on the generator speed, which may be upwards of 1000-3600 revolutions per minute (rpm), with the high pressure valve 49 required to perform an opening or closing action at least twice per revolution (where one revolution of the generator shaft corresponds to one motor cycle for example). Accordingly, the poppet 124 must open and close very quickly, requiring a significant amount of kinetic energy, to allow the motor/pumping cycles to be performed successfully.

The solenoid engaging face 150 of poppet 124 impacts the solenoid core when the valve opens, and the annular seal 152 of the poppet 124 impacts the valve seat (i.e. the valve seat member 140 and the radially outer portion of the central land 144) when the valve closes. If the solenoid engaging face 150 of the poppet 124 is flush with the engaging surface of the solenoid core 128 during impact when the valve 49 opens, the kinetic energy of the poppet is dissipated over a maximum surface area, causing minimum damage to the poppet 124 and the solenoid core 128. Similarly, if the first and second annular ridges 152a, 152b of the annular seal 152 are flush with the valve seat (i.e. the annular ridges 152a, 152b engage with the engaging surfaces of the valve seat member 140 and the central land 144 at substantially the same time) during impact when the valve 49 closes, the kinetic energy of the poppet 124 is dissipated over a maximum surface area causing minimum damage to the poppet 124, the valve seat member 140 and the central land 144. In order to achieve this, the poppet rod 134 must provide accurate guidance to the poppet 124.

In order for the poppet rod 134 to accurately guide the poppet 124, the poppet rod 134 must be substantially perpendicular relative to the plane defined by the sealing lines (which typically means that the rod is perpendicular to within <=0.3° relative to the plane defined by the sealing lines). Prior to coupling the first and second encased parts 120, 122 together, the perpendicularity of the poppet rod may be measured.

In previous poppet valves of this type, the poppet rod is rigidly coupled at its proximal end to a valve body and also at its distal end to a solenoid core. It has been discovered that the valve assembly process, where the poppet rod is required to engage the solenoid core, affects the perpendicularity of the poppet rod relative to the plane defined by the sealing lines. The perpendicularity measurement made prior to valve assembly is thus not reliable after assembly. This leads to greater likelihood of damage of the valves during use, decreasing their working lifetimes.

However, in the valve 49, because the poppet rod 134 is rigidly mounted only to the valve body (i.e. because the poppet rod 134 is cantilevered), the poppet rod 134 does not engage the solenoid core 128 (or any other components provided in the first casing part 125) during valve assembly. That the poppet rod 134 does not extend all the way between the central land 144 and the solenoid core 128 in the assembled valve also helps in this regard. Thus, the perpendicularity measurement conducted prior to valve assembly remains accurate after valve assembly has been completed. That is, if the poppet rod 134 is considered to be sufficiently perpendicular relative to the plane defined by the sealing lines of the valve as a result of the perpendicularity measurement made prior to valve assembly, the poppet rod 134 will remain sufficiently perpendicular after assembly to accurately guide the poppet 134. This significantly reduces the manufacturing tolerance of the valve, increasing its expected working lifetime. This is particularly important for applications, such as offshore windturbines, where access for maintenance is difficult.

The solenoid engaging face 150 of the poppet may optionally comprise an anti-stiction disc which engages the solenoid core 128.

### (Damping)

In order to further reduce the impact forces between the solenoid engaging face 150 and the annular seal 152 of the poppet 124 and the engaging faces of the solenoid core 128, the valve seat member 140 and the central land 144, a damping mechanism may be provided.

Figures 5(a) -5(c) each show schematic sectional views through a portion of a damping mechanism (a second damping mechanism) of a valve 200, Figure 5(a) showing the damping mechanism in a valve open position, Figure 5(b) showing the damping mechanism in an intermediate position between the valve open position and a valve closed position and 5(c) showing the damping mechanism in the valve closed position. Valve 200 is similar to valve 49 described above, but the poppet rod and poppet are adapted to form parts of the damping mechanism. Components of valve 200 which are identical to corresponding components of valve 49 are given the same reference numerals.

The valve 200 comprises a poppet having a poppet sleeve 247 through which a poppet rod 234 extends, the poppet being slidable on the poppet rod 234 which guides the poppet between the valve open position, where a (typically annular) solenoid engaging face of the poppet engages a solenoid core and a valve closed position where an annular seal of the poppet sealingly engages a valve seat of a valve body, the valve seat comprising an annular valve seat member and a radially outer portion of a central land provided in an annulus of the valve seat member (similar to valve seat of valve 49 described above). The annular seal comprises a first annular sealing ridge which engages the valve seat member and a second annular sealing ridge which engages the radially outer portion of the central land, the first annular ridge having a greater diameter than the second annular ridge.

The poppet rod 234 comprises a proximal end 245 rigidly mounted to the central land of the valve body 138 and a distal end which is not rigidly mounted (i.e. the poppet rod 234 is cantilevered to the central land). The poppet rod 234 comprises a stepped flange 202 (a first interlocking formation) adjacent the poppet rod proximal end 245. In the example of Figures 5(a)-(c), the stepped flange extends from the central land 144 into a cavity 275 provided in the sleeve 247 of the poppet 234. The base of the stepped flange 202 is co-planar with the said portion of the central land 144 forming part of the valve seat. An elongate portion 203 of the poppet rod 234 extends from the stepped flange 202 into the poppet sleeve 247 to guide the poppet. The poppet sleeve 247 further comprises an (second) interlocking formation 204 configured to interlock with the stepped flange 202 when the poppet is in the valve closed position (see Figure 5(c)). It will be understood that the base of the stepped flange 202 need not be co-planar with the said portion of the central land 144 and that, alternatively, the base of the stepped flange 202 may be recessed into a (e.g. machined) cavity in the central land 144 adjacent the proximal end 245 of the poppet rod 234.

Hydraulic fluid is provided in the cavity 275 between the interlocking formation 204 and the stepped flange 202. As most clearly shown in Figures 5(b) and 5(c), a first damping channel 206 is formed between the stepped flange 202 and the interlocking formation 204 as the poppet approaches the valve closed position. Optionally, one or (preferably) more second, L-shaped damping channels 207 may also be provided in the stepped flange 202, each L-shaped damping channel comprising a first opening 207a on an axial face of the stepped flange 202 and a second opening 207b on a lateral face of the stepped flange 202.

The stepped flange 202, interlocking formation 204, hydraulic fluid and damping channels 206, 207 together form the damping mechanism. More specifically, hydraulic damping is provided by forcing hydraulic fluid through damping channels 206, 207 as the poppet moves from the valve open position to the valve closed position. When the poppet is in the valve open position (see Figure 5(a)), the interlocking formation 204 does not overlap the stepped flange 202 such that hydraulic fluid can flow freely between the first and second openings 207a, 207b of the damping channels 207 and, because the damping channel 206 has not yet been formed between the stepped flange 202 and the interlocking formation 204, hydraulic fluid can flow freely from between the interlocking formation 204 and the stepped flange 202 to a volume between an outer surface of the interlocking formation 204 and an inner surface of the poppet body (not shown in Figures 5(a)-(c)). Accordingly, when the poppet is in the valve open position, minimal (if any) damping is applied to the poppet. As the poppet moves from the valve open position towards the valve closed position, the interlocking formation 204 starts to overlap the stepped flange 202 and the lateral openings 207b of the damping channels 207 are increasingly covered by the interlocking formation 204. The interlocking formation 204 thus increasingly restricts the flow of hydraulic fluid through the damping channels 207, causing the hydraulic fluid to exert an increasing reaction force on the interlocking formation 204 and the stepped flange 202. This causes an increasing level of damping to be applied to the movement of the poppet along the poppet rod 234 as it approaches the valve seat. This increased level of damping helps to dissipate impact forces between the annular seal of the poppet and the valve seat when the poppet reaches the valve closed position, thus increasing the expected lifetime of the valve 200.

When the poppet is in the valve closed position, the interlocking formation 204 only partially covers the openings 207b of the damping channels 207. By not fully covering the openings 207b, it can be ensured that only a low level of damping is applied to movement of the poppet towards the valve open position from the valve closed position. In addition, the flow of hydraulic fluid is not significantly restricted when the interlocking formation 204 is adjacent the elongate portion 203 (i.e. at an intermediate position along its path between the valve open and closed positions) of the poppet rod 234 because hydraulic fluid can flow freely through the second damping channels 207 and between the interlocking formation 204 and the stepped flange 202. Accordingly, the damping mechanism provides minimal damping when the poppet is at an intermediate position between the valve open and valve closed positions. Thus, the poppet may be operable to move between the valve open and valve closed positions at a sufficiently high speed for use as a high pressure valve in a fluid working machine, even though its movement is damped as it approaches the valve closed position.

As the poppet approaches the valve seat, the damping applied to the poppet by the damping mechanism increases, typically by at least 50%, relative to the level of damping applied to the poppet mid-way between the valve open and valve closed positions.

The width of the damping channels 206, 207 may be tuned at the design stage to provide the required level of damping.

It will be understood that the second damping channels 207 may be omitted from the stepped flange 202 (which instead may be a solid block), second damping channels instead being provided in the interlocking formation 204. In this case, the second damping channels in the interlocking formation may be increasingly covered by the stepped flange as the poppet moves from the valve open to the valve closed position, thus increasing the level of damping applied to the movement of the poppet as it approaches the valve closed position. Preferably, the second damping channels are only partially covered by the stepped flange in the valve closed position to enable rapid opening of the valve. In this case, the first damping channel 206 may still be formed between the stepped flange 202 and the interlocking formation 204 when the poppet approaches the valve closed position.

It will also be understood that the stepped flange 202 may be provided on the central land of the valve body rather than the poppet rod 234. Alternatively, part of the stepped flange 202 may be provided on the poppet rod 234 and part of the stepped flange 202 may be provided by the central land of the valve body.

Figures 5(d)-5(f) show a corresponding damping mechanism (a second damping mechanism) which may be provided to increase the damping applied to movement of the poppet as it approaches the valve open position. Figure 5(d) shows the poppet in the valve closed position; Figure 5(e) shows the poppet at an intermediate stage between the valve closed and valve open position; and Figure 5(f) shows the poppet at the valve open position. The damping mechanism shown in Figures 5(d)-5(f) comprises a second stepped flange 202b (third interlocking formation) provided on the underside of the solenoid core 128 (and/or on the poppet rod 234 adjacent its distal end), and a corresponding (fourth) interlocking
formation 204b provided on the end of the poppet sleeve 247 closest to the solenoid core 128 (and opposite the first interlocking formation 204), the (fourth) interlocking formation 204b being configured to interlock with the stepped flange 202b when the valve 200 is in the valve open position (see Figure 5(f)). An L-shaped damping channel 249 is provided through the stepped flange 202b and a further damping channel 206b is formed between the (fourth) interlocking formation 204b and the stepped flange 202b as the poppet approaches the valve open position (see Figures 5(e) and 5(f)). The damping channel 249 in the stepped flange 202b comprises a first opening 249a on an axial face of the stepped flange 202b and a second opening 249b on a lateral face of the stepped flange 202b. When the poppet is in the valve closed position (see Figure 5(d)), the openings 249a, 249b are fully open, and fluid can flow freely through the damping channel 249. However, the openings 249a, 249b of the damping channel 249 may be increasingly covered by the interlocking formation 204b as the poppet approaches the valve open position (see Figures 5(e) and 5(f)), thereby increasing the level of damping applied to movement of the poppet as it approaches the valve open position. This helps to dissipate impact forces between the solenoid engaging face of the poppet and the solenoid core, thus further increasing the expected lifetime of the valve 200. Again, in this case, as the poppet approaches the solenoid core, the damping applied to the poppet by the damping mechanism increases, typically by at least 50% relative to the damping applied to the poppet mid-way between the valve closed and valve open positions.

By providing the damping mechanism between the poppet and the poppet rod 234, a compact arrangement can be achieved.

It will be understood that any suitable interlocking formations may be provided in place of the interlocking formation 204 and the stepped flange 202 on the poppet and poppet rod 234/central land/solenoid respectively to provide the required damping by restricting hydraulic fluid flow through one or more damping channels between said interlocking formations.

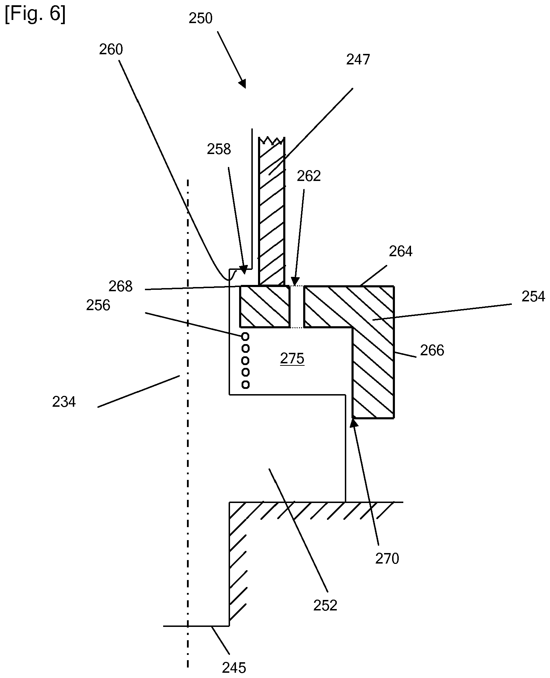

An alternative damping mechanism 250 (a second damping mechanism) is illustrated in Figure 6. The damping mechanism 250 is similar to the damping mechanism of Figures 5(a)-(c) and identical features will be given the same reference numerals. The damping mechanism 250 comprises a stepped flange 252 provided on the poppet rod 234 similar to that shown in Figures 5(a)-(c), but with no damping channels extending therethrough the stepped flange 250. The damping mechanism 250 further comprises a discrete interlocking formation component 254 slidably mounted on the poppet rod 234 and a resilient biasing mechanism 256 (such as a partially compressed spring) extending between the interlocking formation 254 and the stepped flange 252, the resilient biasing mechanism biasing (urging) the discrete interlocking formation 254 away from the stepped flange
252. The poppet rod 234 of the damping mechanism 250 comprises a recess 258 which receives a portion of the discrete interlocking formation 254. The recess 258 comprises a ceiling 260 which is engagable with the portion of the interlocking formation 254 received by the recess 258. Hydraulic fluid is provided in the cavity 275 between the poppet rod and the poppet. A damping channel 262 extends through an upper (axial) face 264 of the interlocking formation 254 (although it will be understand that a damping channel may additionally or alternatively extend through a lateral face 266 of the interlocking formation 254). The base 268 of the poppet sleeve 247 is arranged to engage the axial face 264 of the interlocking formation 254 when the poppet is approaching the valve closed position. However, it will be understood that a base of an internal surface of the poppet may alternatively be arranged to engage the axial face 264 of the interlocking formation 254 when the poppet is approaching the valve closed position.

The interlocking formation 254 is slidably mounted on the poppet rod 234 adjacent to either the proximal end 245 (as illustrated in Figure 6) or the distal end 248 of the poppet rod 234 such that the level of damping applied to the movement of the poppet is increased as the poppet approaches the valve closed position. This is explained in more detail as follows.

At the valve open position, the said portion of the interlocking formation 254 engages the ceiling 260 of the recess 258 and there is no overlap between the interlocking formation 254 and the stepped flange 252. Accordingly, when the poppet is in the valve open position, minimal (if any) damping is applied to the poppet. When the poppet moves from the valve open position towards the valve closed position, the base 268 of the poppet sleeve 247 engages the axial face 264 of the interlocking formation 254 and drives the interlocking formation 254 towards the stepped flange 252. This reduces the volume between the interlocking formation and the stepped flange 252. Before the interlocking formation 254 begins to overlap with the stepped flange 252, hydraulic fluid can flow out freely from the cavity 275. However, when the interlocking formation 254 begins to overlap (or interlocks) with the stepped flange 252, the flow of hydraulic fluid from the cavity 275 becomes restricted through the damping channel 262 and through a damping channel 270 between the interlocking formation 254 and the stepped flange 252. The overlap between the interlocking formation 254 and the stepped flange 252 thus restricts the flow of hydraulic fluid from the cavity 275, causing the hydraulic fluid within the cavity 275 to exert an increased reaction force on the interlocking formation 254 and the stepped flange 252. This causes an increased level of damping to be applied to the movement of the poppet along the poppet rod 234 as it approaches the valve seat. This increased level of damping helps to dissipate impact forces between the annular seal of the poppet and
the valve seat when the poppet reaches the valve closed position, thus increasing the expected lifetime of the valve.

When the poppet moves from the valve closed position towards the valve open position, the biasing mechanism urges the interlocking formation 254 away from the stepped flange 252. The movement of the interlocking formation 254 may initially follow that of the poppet sleeve 247; alternatively, the poppet sleeve 247 may disengage from the interlocking formation 254 as soon as the poppet moves towards the valve open position. When the interlocking formation 254 engages the ceiling 260 of the recess 258 in the poppet rod 234, further movement of the interlocking formation 254 away from the stepped flange 252 is prevented. Accordingly, the ceiling 260 acts as an end-stop which prevents further movement of the interlocking formation 254 away from the stepped flange 252. In addition, if it has not done so already, the poppet sleeve 247 disengages from the interlocking formation 254 as the poppet moves further towards the valve open position.

As explained above, when the poppet is in the valve closed position, the interlocking formation 254 overlaps the stepped flange 252. However, hydraulic fluid is free to flow through the damping channel 262 (and around the stepped formation 254). Accordingly, only a low level of damping is applied to movement of the poppet towards the valve open position from the valve closed position. In addition, because when the interlocking formation 254 engages the end-stop 260, there is no overlap between the interlocking formation 254 and the stepped flange 252, fluid can flow freely between the interlocking formation 254 and the stepped flange 252 when the poppet is at an intermediate stage between the valve closed position and the valve open position. Thus, the level of damping provided by the damping mechanism 250 is minimal until the interlocking formation 254 is driven towards the stepped flange 252 by the poppet such that they overlap.

The biasing mechanism is typically rated (i.e. the magnitude of the biasing force applied by the biasing mechanism is selected) in combination with the diameter of the damping channel 262 such that the time it takes the interlocking formation 254 to return to its "ready" position (i.e. the position where it engages the end-stop 260) when the poppet moves from the valve closed position to the valve open position is compatible with the required frequency of poppet operation. Typically, this means that the biasing mechanism 256 and the diameter of the damping channel 262 are selected such that the interlocking formation 254 returns to its "ready" position by the time the poppet starts moving back from the valve open position towards the valve closed position.

By minimising the level of damping when the poppet is not approaching the valve closed position, and by tuning the biasing mechanism and the damping channel diameter appropriately, the poppet may be operable to move between the valve open and valve closed positions at a sufficiently high speed for use as a high pressure valve in a fluid working machine, even though its movement is damped as it approaches the valve closed position.

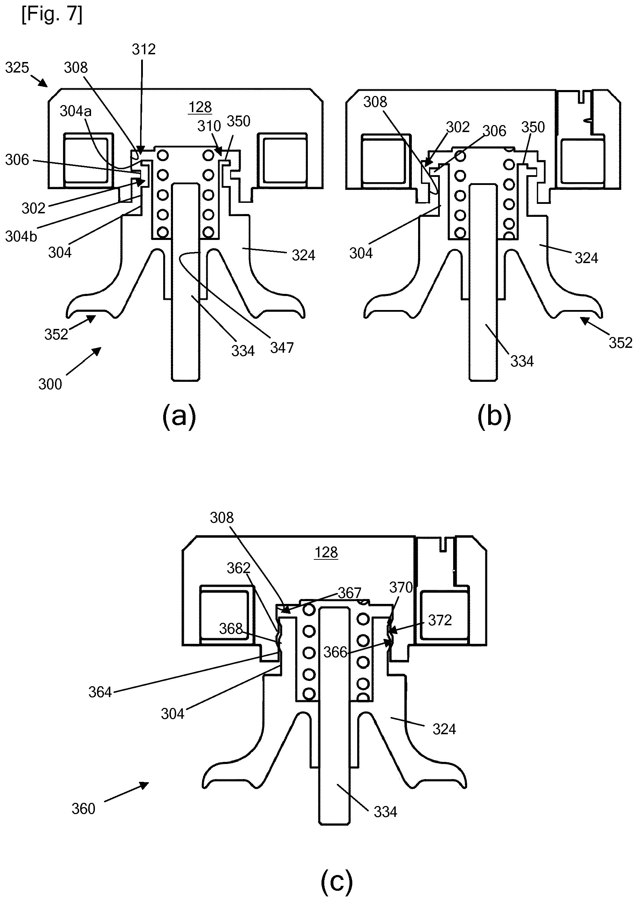

An alternative valve 300 comprising an alternative damping mechanism (a third damping mechanism) is shown in Figure 7(a). The alternative valve 300 is similar to valve 49 described above, but the poppet and first casing parts have been adapted to provide a damping mechanism between the poppet and the first casing. Components of the valve 300 which are identical to corresponding components of valve 49 are given the same reference numerals.

The valve 300 comprises an adapted first valve casing 325 and an adapted poppet 324, the first valve casing 325 and poppet 324 being adapted to provide part of a damping mechanism between the first valve casing 325 and the poppet 324. As before, the poppet 324 is slidable along (and guided by) a poppet rod 334 between a valve open position where a solenoid engaging face 350 of the poppet 324 engages a solenoid core 128 and a valve closed position where an annular seal 352 of the poppet engages a valve seat (not shown in Figure 7(a)). As above, the valve seat typically comprises an annular valve seat member provided around an annular port and a radially outer portion of a central land provided in the annulus of the valve seat member.

The poppet 324 is provided with a recess 302 on an outer side surface 304 of the poppet 324 adjacent to its solenoid engaging face 350, but set back from its solenoid engaging face 350 towards the annular seal 352. The recess 302 extends between first and second portions 304a, 304b of the outer side surface 304 of the poppet 324. The first casing 325 comprises a projection 306 which projects from an internal surface 308 of the first casing towards the poppet 324. Hydraulic fluid is provided between the first casing 325 and the poppet 324. The projection 306, recess 302 and first and second portions 304a, 304b of the side surface of the poppet 324 form a damping channel 312 of varying width between the casing 325 and the poppet 324.

When the poppet 304 is in the valve closed position, the first portion 304a of the outer surface 304 of the poppet 324, which extends between the recess 302 and the solenoid engaging face 350, is aligned with the projection 306, narrowing the damping channel 312 thereby restricting the flow of hydraulic fluid through the channel 312. Accordingly, when the solenoid is energised to move the poppet towards the valve open position, initial movement of the poppet is damped because hydraulic fluid is forced from between the solenoid engaging face 350 of the poppet through the narrowed damping channel 312. However, as the poppet moves further towards the valve open position, the recess 302 becomes aligned with the projection 306. This increases the width of the damping channel 312, thus providing a lower impedance to the flow of hydraulic fluid and decreasing the level of damping applied to the movement of the poppet. Accordingly, the damping mechanism provides minimal damping when the poppet 324 is at an intermediate position between the valve open and valve closed positions. This allows the poppet 324 to move between the valve open and valve closed positions at a sufficiently high speed for use as a high pressure valve in a fluid working machine.

As the solenoid engaging face 350 of the poppet 324 approaches the solenoid core 128, a portion 304b of the outer surface 304 of the poppet 324 closer to the annular seal 352 than to the recess 302 becomes aligned with the projection 306 of the inner face of the first casing 325, again narrowing the damping channel 312 and restricting the flow of hydraulic fluid through it. As the solenoid engaging face 350 of the poppet 324 moves closer to the solenoid core 128, hydraulic fluid 310 is displaced by the decreasing volume between the solenoid engaging face 350 and the solenoid core 128 into the volume between the casing 325 and the poppet 324. This flow of hydraulic fluid 310 becomes restricted by the narrowing of the damping channel 312 which causes the hydraulic fluid to exert a reaction force on the first surface 350 of the poppet 324, thus damping the movement of the poppet 324 as it approaches the solenoid core 128. This damping helps to dissipate impact forces between the solenoid engaging face 350 of the poppet 324 and the solenoid core 128, thus increasing the expected lifetime of the valve 300.

It will be understood that the damping mechanism may be operated in reverse to damp movement of the poppet as it approaches the valve closed position in order to help to dissipate impact forces between the annular seal 352 of the poppet 324 and the valve seat, thus increasing the expected lifetime of the valve 300.

It will also be understood that the recess 302 may alternatively be provided on the inner surface 308 of the valve casing 325 while the projection 306 may alternatively be provided on the outer side surface 304 of the poppet 324 (see Figure 7(b)).

One or more additional or alternative projections and/or recesses may be provided on the outer surface 304 of the poppet 324 and/or the valve casing to achieve the desired damping effect. For example, Figure 7(c) illustrates an alternative valve 360 which is similar to the valve 300 shown in Figures 6(a) and 6(b) but with a modified damping mechanism. Identical features will be given the same reference numerals. In the embodiment of Figure 7(c), the inner surface 308 of the casing 325 comprises two projections 362, 364 separated by a recess 366, together with a further recess 367 between the projection 362 and the solenoid core 128. The outer surface 304 of the poppet 324 comprises two projections 368, 370 separated by a recess 372.

When the poppet 324 is in the valve closed position (see Figure 7(c)), the projections 368, 370 of the poppet 324 are aligned with the projections 364, 362 of the casing 325. This creates a narrow damping channel between the projections 364, 368 and 362, 370 which restricts the flow of hydraulic fluid. As the poppet 324 moves towards the valve open position, hydraulic fluid is displaced from between the solenoid engaging face 350 of the poppet 324 and the solenoid core 128 through the damping channel between the projections 364, 368 and 362, 370. Because the damping channel is narrow, the flow of hydraulic fluid is restricted. Accordingly, the hydraulic fluid exerts a reaction force on the poppet 324, damping its movement.

As the poppet 324 moves further towards the valve open position, the projection 368 on the poppet 324 becomes aligned with the recess 366 in the casing 325, while the projection 370 becomes aligned with the other recess 367 in the casing 325, which causes the width of the damping channel to increase, thereby reducing the level of damping applied to the movement of the poppet 324. Accordingly, the damping mechanism provides minimal damping when the poppet 324 is at an intermediate position between the valve open and valve closed positions. This allows the poppet 324 to move between the valve open and valve closed positions at a sufficiently high speed for use as a high pressure valve in a fluid working machine.

As the poppet 324 approaches the valve open position, the projection 368 on the poppet becomes aligned with the projection 362 extending from the inner wall 308 of the casing 325, again narrowing the damping channel. The flow of hydraulic fluid from between the solenoid engaging surface 350 and the solenoid core 128 becomes restricted by the narrowing of the damping channel. The reaction force applied by the hydraulic fluid on the solenoid engaging face 350 of the poppet 324 thus damps the movement of the poppet 324 as it approaches the solenoid core 128. This damping helps to dissipate impact forces between the solenoid engaging face 350 of the poppet 324 and the solenoid core 128, thus increasing the expected lifetime of the valve 300.

It is noted that the projections and recesses in Figure 7(c) are provided with chamfered surfaces, which provide more gradual increases and decreases in damping applied to the movement of the poppet than the stepped projections and recesses illustrated in Figures 7(a) and 7(b).

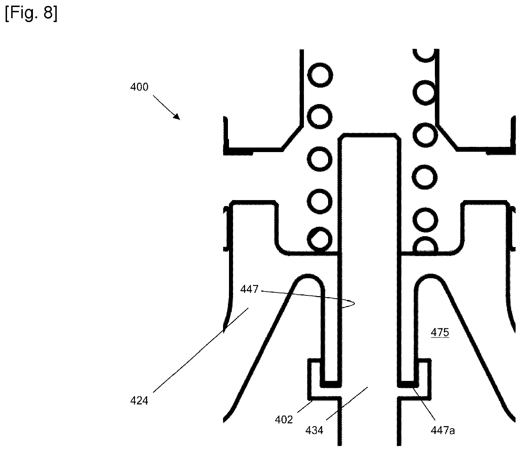

Figure 8 is a schematic sectional view through a portion of another alternative valve 400 comprising another alternative (in this case a dashpot) damping mechanism (a second damping mechanism). The valve 400 is similar to the valves shown in Figures 4, 5 and 7(a)-(c) and identical features will be given the same reference numerals. The valve 400 comprises a poppet rod 434 having a proximal end (not shown in Figure 8) rigidly mounted to a valve body (not shown in Figure 8) and a distal end (not shown in Figure 8) which is not rigidly mounted. The poppet rod 434 further comprises an interlocking formation 402 in the form of an annular cradle which is configured to interlock with a foot 447a of a
sleeve 447 of a poppet 424 when the poppet 424 is in the valve closed position. Hydraulic fluid is provided in a cavity 475 in the sleeve 447. When the poppet 424 is in the valve open position, the foot 447a of the sleeve 447 is displaced from the cradle 402 and hydraulic fluid is provided between them. When the poppet 424 approaches the valve closed position, the foot 447a of the sleeve 447 enters the cradle 402, and hydraulic fluid is displaced from between the foot 447a of the sleeve 447 and the cradle 402 into the cavity 475 through a narrow damping channel between the cradle 402 and the sleeve 447. The narrow damping channel restricts the flow of hydraulic fluid, causing the hydraulic fluid to exert a reaction force on the sleeve 447, thus damping its movement as it approaches the valve closed position. This reduces the impact force between an annular seal of the poppet 424 and a valve seat with which the annular seal engages when the poppet 424 reaches the valve closed position (i.e. in a similar way to valves 200, 300, 360 described above), thus improving the expected life expectancy of the valve.

Figures 9(a)-9(c) are schematic sectional views through a portion of yet another alternative valve 500 comprising yet another alternative damping mechanism (a first damping mechanism). The valve 500 is similar to the valves shown in Figures 4, 5(a)-(c), 6, 7(a)-(c) and 8 and identical features will be given the same reference numerals. The valve 500 comprises a poppet rod 534 having a projection 502 at an intermediate position along its length between a proximal end rigidly mounted to a central land and a distal end which is not rigidly mounted. The valve 500 further comprises a poppet 524 which has a sleeve 547 through which the poppet rod 534 extends. The projection 502 of the poppet rod projects from the poppet rod 534 into a cavity 575 within the sleeve 547. The sleeve 547 comprises a damping region 538 in which the projection 502 is housed as the poppet 524 moves between valve open and valve closed positions. The sleeve 547 comprises a first damping channel 550 at a first end 538a of the damping region 538 and a second damping channel 551 at a second end 538b of the damping region 538, the first end 538a being closer to a solenoid core (with which a solenoid engaging face of the poppet engages in the valve open position) than to the central land (with which an annular seal of the poppet engages in the valve closed position) and the second end 538b being closer to the central land than to the solenoid core. The sleeve 547 further comprises first and second radial free moving holes (or slots) 552, 553 which are spaced from the damping channels 550, 551, the first free moving hole 552 typically being positioned closer to the first damping channel 550 than to the mid-point M of the damping region and the second free moving hole 553 typically being positioned closer to the second damping channel 551 than to the mid-point M of the damping region 538. Each of the damping channels 550, 551 and the free moving holes 552, 553 are capable of putting the cavity 575 in fluid communication with a cavity 504 provided
between the sleeve 547 and an internal surface of a body of the poppet. The damping channels 550, 551 each typically provide a narrower flow path than each of the free-moving holes 552, 553. Hydraulic fluid is provided in the cavity 575.

When the poppet 524 is in the valve closed position (as shown in Figure 9(a)), the projection 502 on the poppet rod 534 does not cover the first damping hole 550 but does cover the first free moving hole 552 from inside the cavity 575. As the poppet 524 moves from the valve closed to the valve open position, the projection 502 acts as a piston within the cavity 575, causing the volume between the projection 502 and the second end 538b of the damping region 538 to decrease. This causes hydraulic fluid to be forced out of the second free moving hole 553 and the second damping hole 551. At the same time, hydraulic fluid is drawn into the cavity 575 from the cavity 504 through the first damping hole 550 and subsequently also through the first free moving hole 552. As the poppet 524 approaches the valve open position, the projection 502 covers the second free moving hole 553 but not the second damping channel 551. The restricted flow of fluid from the cavity 575 to the cavity 504 through the damping channel 551 causes the hydraulic fluid to exert a reaction force on the projection 502 which damps the movement of the poppet 524 as it approaches the valve open position. The damping mechanism thus helps to dissipate impact forces between the solenoid engaging face of the poppet and the solenoid core, which improves the working life expectancy of the valve 500.

It will be understood that a similar process occurs when the poppet 524 moves from the valve open position to the valve closed position, the restricted flow of fluid through the damping channel 550 causing movement of the poppet 524 to be damped as it approaches the valve closed position, the free-moving hole 552 being covered by the projection 502. The damping mechanism thus helps to dissipate impact forces between the annular seal of the poppet 524 and the valve seat, thus increasing the expected lifetime of the valve 500.

It will also be understood that, when the poppet 524 is at an intermediate stage between the valve open and valve closed positions (i.e. mid-stroke), the movement of the poppet 524 is damped to a lesser extent because the free moving holes 552, 553 are uncovered, thus providing a larger cross sectional flow area between the cavities 575 and 504. This effect is amplified by the free-moving holes 552, 553 providing wider flow paths than the damping holes 550, 551. This allows the valve to open and close very quickly, even though movement of the poppet is damped as it approaches the valve open and closed positions. This allows the valve to be used as a high pressure valve in a fluid working machine, where fast opening and closing is typically required.

Figure 9(d) shows part of an alternative valve 590 to valve 500 shown in Figures 9(a) to 9(c). The valve 590 is almost identical to the valve 500 shown in Figures 9(a) to 9(c) and the same reference numerals will be used for identical features. The differences between valve 590 and valve 500 are that: valve 590 lacks free moving holes 552, 553; the damping holes 591, 592 of valve 590 are wider than damping holes 550, 551 of the valve 500; and the projection 502 of valve 590 has a further projection 596 extending from it along an intermediate portion of its length (said intermediate portion having a length which is less than the full length of the projection 502) into the cavity 575. The ends of the projection 596 are set back from the ends of the projection 502 from which it extends.

When the poppet 524 of the valve 590 is in the valve closed position (as shown in Figure 9(d)), the further projection 596 on the poppet rod 534 covers at least a portion of the first damping hole 591. As the poppet 524 moves from the valve closed to the valve open position, the projections 502, 596 act as a piston within the cavity 575, causing the volume between the projections and the second end 538b of the damping region 538 to decrease. This causes hydraulic fluid to be forced out of the second damping hole 592. At the same time, hydraulic fluid is drawn into the cavity 575 from the cavity 504 through the first damping hole 591 (whose width increases as the poppet 524 moves towards the valve open position) as it moves away from the projection 596. As the poppet 524 approaches the valve open position, the projection 596 covers an increasing portion of the second damping hole 592. This causes an increasing restriction to the flow of hydraulic fluid from the cavity 575 to the cavity 504, in turn causing the hydraulic fluid to exert an increasing reaction force on the projections 502, 596 which damps the movement of the poppet 524 as it approaches the valve open position. The damping mechanism thus dissipates impact forces between the solenoid engaging face of the poppet and the solenoid core, which improves the working life expectancy of the valve 590.

A similar process occurs when the poppet 524 moves from the valve open position to the valve closed position, the damping channel 591 becoming increasingly covered by the projection 596, thus increasing the restriction to the fluid flow between cavities 575 and 504, causing movement of the poppet 524 to be damped as it approaches the valve closed position. The damping mechanism thus helps to dissipate impact forces between the annular seal of the poppet 524 and the valve seat, thus increasing the expected lifetime of the valve 590.

Due to the wider portion of the damping holes 591, 592 in fluid communication with the cavity 575, the movement of the poppet 524 is damped to a lesser extent when it is at an intermediate stage between the valve open and valve closed positions (i.e. mid-stroke). This allows the valve to open and close very quickly, even though movement of the poppet is damped as it approaches the valve open and closed positions. This allows the valve to be used as a high pressure valve in a fluid working machine, where fast opening and closing is typically required.

It will be understood that in all of the above embodiments (and as illustrated in Figure 9(d)), guide bearings 599 are typically provided between the poppet rod and the poppet to guide movement of the poppet 524 between the valve open and valve closed positions.

With respect to the damping mechanisms illustrated in Figures 6, 7(a)-(c), 8, 9(a) to 9(d) described above, it will be understood that the level of damping provided by the damping mechanism increases as the poppet approaches the valve open and/or valve closed positions, typically by at least 50% relative to the damping applied to the poppet mid-way between the valve open and valve closed positions.

Any single damping mechanism or combination of damping mechanisms described above may be employed to achieve the required damping.

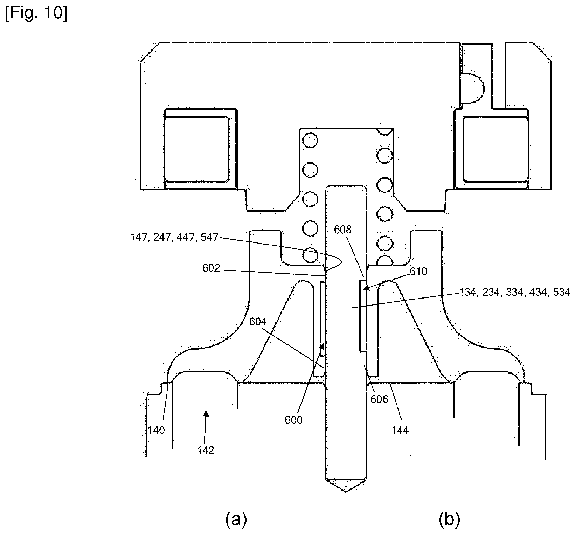

In any or all of the above embodiments, a recess 600 may be formed in the inner surface of the poppet sleeve 147, 247, 447, 547 as shown in Figure 10(a). The recess 600 typically extends longitudinally along the inner surface of the sleeve. As a result, only first and second portions 602, 604 of the inner surface of the sleeve 147, 247, 447, 547 on either side of recess 600 engage the poppet rod 134, 234, 334, 434, 534. This reduces the surface areas of the sleeve of the poppet and poppet rod which translate directly adjacent to one another, which helps to reduce shear losses in the valve.

Additionally or alternatively, as shown in Figure 10(b), a recess 610 may be provided in the outer surface of the poppet rod 134, 234, 334, 434, 534. Typically the recess 610 extends longitudinally along an elongate portion of the poppet rod. In this case, only first and second portions 606, 608 of the poppet rod 134, 234, 334, 434, 534 on either side of recess 610 engage the inner surface of the sleeve 147, 247, 447, 547. Again, this reduces the surface areas of the sleeve of the poppet and poppet rod that translate directly adjacent one another, which helps to reduce shear losses in the valve.

### (Manufacturing the High Pressure Valve)

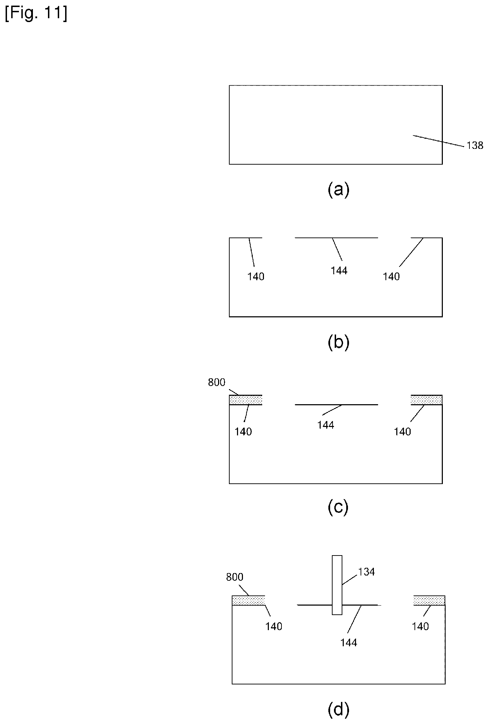

Figures 11-12 illustrate a method of manufacturing the poppet valve 49 described above. In a first step shown in Figure 11(a), a valve body is provided in a casing integrally formed in the body casting of a fluid working machine (such as pump 10 or motor 14 described above). In a next step, shown in Figure 11(b), the annular port 142 may be machined in the valve body, thus forming the annular valve seat 140 and central land 144, however it will be appreciated that this step would more typically have been done during manufacture of the valve body. In a third step, shown in Figure 11(c), the surface of the valve seat member 140 is treated with a hardening agent 800 (e.g. nitrogen in a nitriding hardening process) to improve its durability against impacts from a poppet 124. During this step, the central land 144 is shielded so that it is not treated with hardening agent.

In a next step, shown in Figure 11(d), a recess is machined in the (unhardened) central land 144 and a proximal end of a poppet rod 134 is rigidly mounted to the recess in the central land 144. Because the central land 144 is not treated with hardening agent, this step is readily achievable.

Next, a perpendicularity measurement is made of the poppet rod 134 relative to a plane defined by the sealing lines of the valve as discussed above. Practically speaking, this perpendicularlity measurement may be made relative to the valve seat (assuming that the valve seat is substantially co-planar with the plane defined by the sealing lines as is the case in the example of Figure 4), or to a portion of the valve seat lying on a plane which is co-planar or parallel to the plane defined by said one of said sealing line(s). If the perpendicularity of the rod 134 is insufficient, it may be adjusted or discarded. If/when the perpendicularity of the rod 134 is sufficiently perpendicular, a poppet 124 is then fitted over the poppet rod 134 via a poppet sleeve 147. A first casing portion 125 comprising a solenoid 126, 128 is then demountably coupled to the valve body. In this step, the poppet rod 134 is not required to interact with any other components of the valve, so that the perpendicularity measurement made prior to coupling the first casing 125 to the valve body remains accurate after the first casing 125 has been coupled to the valve body. It will be understood that the step of fitting the poppet 124 on the poppet rod 134 is unlikely to cause changes to the perpendicularity of the poppet rod 134 relative to the plane defined by the sealing lines.

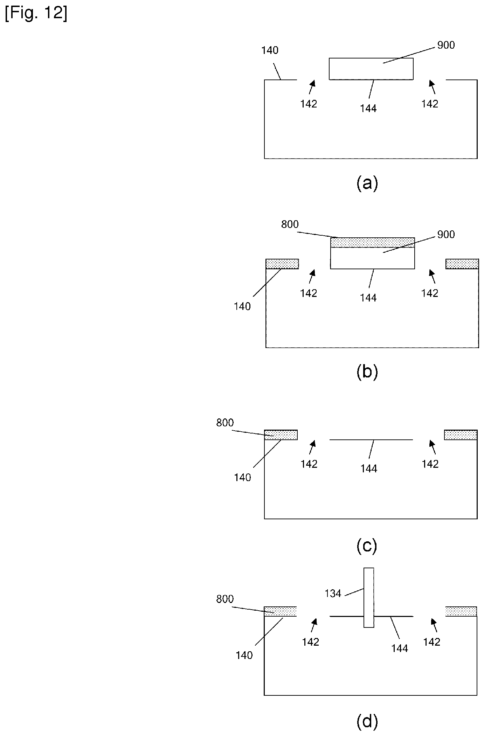

As an alternative to shielding the central land 144 to prevent it being treated with the hardening agent, the central land may be provided with a raised portion 900 as illustrated in Figure 12(a). In this case, the central land 144 may be treated with the hardening agent at the same time as the valve seat member 140, as shown in Figure 12(b). However, in this case, an additional next step (shown in Figure 12(c)) of removing the hardened raised portion is performed prior to machining the recess in the central land 144 and rigidly mounting the proximal end of the poppet rod 134 to the central land 144 as shown in Figure 12(d).

It will be understood that it is not necessary to shield the entire central land 144 as is shown in Figures 11-12. In fact, it is typically beneficial to harden the portion of the central land which engages the annular seal 152 of the poppet 124. Accordingly, only a central region of the central land to which the poppet rod 134 is subsequently rigidly mounted may be shielded from the hardening agent (or only that central region of the central land 144 may be raised and subsequently removed before rigidly mounting the poppet rod 134 to the central land 144).

In an alternative method, the poppet rod 134 may be integrally formed with the central land 144 before the perpendicularity measurement takes place. In this case, there is no requirement to prevent the hardening of a portion of the central land 144, or to remove any hardened portions of the central land after hardening.

Further modifications and variations may be made within the scope of the appended claims.

### Reference Signs List

- 1: Wind Turbine
- 2: Variable-pitch turbine
- 4: Electrical Generator
- 6: 3-phase grid
- 10: Hydraulic pump
- 12: Driveshaft
- 14: Hydraulic motor
- 16: Driveshaft
- 18: Pressurised fluid manifold
- 20: Oleopneumatic accumulator
- 26: Low Pressure manifold
- 28: Low Pressure accumulator
- 30: Eccentric cam
- 32: Piston Cylinder Device
- 34: Working Chamber
- 36: Cylinder
- 38: Piston
- 40: Piston foot
- 42: Speed Sensor
- 44: Machine Controller
- 46: Low Pressure Valve
- 48: Low pressure manifold
- 49: Poppet Valve
- 50: High pressure manifold
- 60: Plot of piston stroke position vs. time
- 70: Plot of high pressure valve control signal vs. time
- 72: Second switching signal
- 74: Electrical Pulses
- 80: Plot of high pressure valve position vs. time
- 90: Plot of low pressure valve control signal vs. time
- 92: First Switching Signal
- 100: Plot of low pressure valve position vs. time
- 110: Plot of working chamber pressure vs. time
- 120: First encased part of valve
- 122: Second encased part of valve
- 124: Poppet of valve
- 125: First casing of valve
- 126: Solenoid coil
- 128: Solenoid core
- 130: Recess in solenoid core
- 132: Coil spring
- 134: Poppet rod
- 138: Valve body
- 140: Valve seat member
- 142: Port
- 144: Central land
- 145: Proximal end of poppet rod
- 147: Poppet sleeve of poppet
- 148: Distal end of poppet rod
- 150: Solenoid engaging face of poppet
- 152: Annular seal of poppet
- 152a: Annular ridge
- 152b: Annular ridge
- 154: Poppet body of poppet
- 155: High Pressure port of poppet
- 200: Poppet Valve
- 202: Stepped flange
- 202b: Stepped flange
- 203: Elongate portion of poppet rod
- 204: Interlocking formation
- 204b: Interlocking formation
- 206: Damping channel
- 206b: Damping channel
- 207: L-shaped damping channel
- 207a: Opening
- 207b: Opening
- 234: Poppet rod
- 245: Proximal end of poppet
- 247: Poppet sleeve
- 248: Distal end of poppet rod
- 249: Damping Channel
- 249a: Opening
- 249b: Opening
- 250: Damping mechanism
- 252: Stepped flange
- 254: Discrete interlocking formation
- 256: Biasing mechanism
- 258: Recess
- 260: End-stop
- 262: Damping channel
- 264: Axial face
- 266: Lateral face
- 268: Base
- 270: Damping channel
- 275: Cavity between poppet rod and poppet
- 300: Poppet Valve
- 302: Recess
- 304: Outer surface of poppet
- 304a: Portion of outer surface of poppet
- 304b: Portion of outer surface of poppet
- 306: Projection
- 308: Internal surface of first casing part
- 310: Hydraulic fluid
- 312: Damping channel of valve
- 324: Poppet of valve
- 325: First casing part of valve
- 334: Poppet rod of valve
- 350: Solenoid engaging face of poppet
- 352: Annular seal of poppet
- 360: Poppet valve
- 362: Projection
- 364: Projection
- 366: Recess
- 367: Recess
- 368: Projection
- 370: Projection
- 372: Recess
- 400: Poppet Valve
- 402: Interlocking formation
- 424: Poppet
- 434: Poppet rod
- 447: Sleeve
- 447a: Foot of sleeve
- 500: Poppet valve
- 502: Projection/piston
- 504: Cavity
- 524: Poppet
- 534: Poppet rod
- 538: Damping region
- 538a: End of damping region
- 538b: End of damping region
- 547: Poppet sleeve
- 550: Damping channel
- 551: Damping channel
- 552: Free moving hole
- 553: Free moving hole
- 575: Cavity
- 590: Poppet valve
- 591: Damping hole
- 592: Damping hole
- 596: Projection
- 599: Guide Bearings
- 600: Recess
- 602: First engaging portion of inner surface of sleeve
- 604: Second engaging portion of inner surface of sleeve
- 606: First engaging portion of poppet rod
- 608: Second engaging portion of poppet rod
- 610: Recess
- 800: Hardening agent
- 900: Mounting Region raised portion

## Claims

1. A poppet valve (500) comprising:
at least one valve body (138) comprising at least one valve seat (140);
at least one poppet (524) which is slidable on a poppet rod (534) between a valve open position and a valve closed position, the poppet (524) sealingly engaging the valve seal (140) along one or more sealing lines (152a, 152b) at the valve closed position and the poppet (524) being spaced from the valve seat at the valve open position;
a blasing mechanism (132) for biasing the poppet (524) towards the valve open or valve closed position; and
a solenoid (126) for actuating the poppet (524) against the bias of the biasing mechanism (132), the solenoid (126) being coupled to the valve body (138);
wherein the poppet rod (534) comprises a first end (145) and a second end (148) opposite the first end (145), the first end (145) being rigidly mounted to the valve body (138) such that it extends substantially perpendicularly from the valve body (138) relative to a plane defined by at least one of said sealing line(s) (152a, 152b), the second end (148) of the poppet rod (534) not being rigidly mounted such that the perpendicularity of the rod Is measurable prior to coupling the solenoid (126) to the valve seat (140) and the perpendicularity of the poppet rod (534) is substantially unaffected by coupling and/or decoupling of the solenoid (126) to and/or from the valve seat (140),
wherein the poppet (524) comprises a sleeve (547) and the poppet rod (534) extends through at least part of the sleeve (547),
**characterised in that** a sliding movement of the poppet (524) guided by the poppet rod (534) Is damped by a first damping mechanism between the poppet rod (534) and the sleeve (547) configured to be slidable on the poppet rod (534), wherein the first damping mechanism comprises a piston (502) operable to reciprocate within a cavity (575) comprising one or more damping channels (550, 551, 552, 553) such that, when the piston (502) reciprocates within the cavity (575), hydraulic fluid is drawn into or expelled from the cavity (575) via one or more of the one or more damping channels (550, 551, 552, 553) to damp the sliding movement of the poppet (524),
and said one or more damping channels (550, 551, 552, 563) include first holes (552, 553) provided at the sleeve (547),
and said first holes (552,553) are uncovered when the poppet (524) Is at an intermediate stage between the valve open position and the valve closed position, and said first hole (552, 553) is covered when the poppet (524) Is in the valve open position or the valve closed position.

2. A poppet valve according to claim 1 wherein the valve seat (140) comprises an annular valve seat member.

3. A poppet valve according to claim 2 wherein the valve seat further comprises at least a portion of a central land (144) provided in an annulus of the valve seat member (140) and forming part of the valve body (138).

4. A poppet valve according to claim 3 wherein the poppet comprises an annular seal which sealingly engages both the valve seat member (140) and the central land (144) when the poppet is in the valve closed position.

5. A poppet valve according to any claim 3 wherein the poppet rod (534) is rigidly mounted to the central land (144).

6. A poppet valve according to claim 1 wherein the first damping mechanism is operable to increase the level of damping applied to the sliding movement of the poppet (524) as it approaches the solenoid (126) and/or the valve seat (140) as the poppet (524) moves from the valve closed position to the valve open position and/or from the valve open position to the valve closed position respectively.

7. The poppet valve according to claim 1, further comprising a second damping mechanism provided between the poppet (524) and the poppet rod (534) and/or the valve body (138).

8. The poppet valve according to claim 7 wherein the second damping mechanism operates by pushing hydraulic fluid from between the poppet (524) and the poppet rod (534) and/or the valve body (138) through one or more damping channels, the damping channel(s) restricting the flow of hydraulic fluid which causes the sliding movement of the poppet (524) along the poppet rod (534) to be damped.

9. The poppet valve of claim 8 wherein the second damping mechanism comprises a first interlocking formation configured to interlock with a second interlocking formation when the poppet (524) is in the valve closed position, the second interlocking formation being provided on the poppet rod (534) and/or the valve body (138), the second damping mechanism being operable to damp the sliding movement of the poppet (524) guided by the poppet rod (534) by pushing hydraulic fluid from between the first and second interlocking formations through one or more of the damping channel(s).

10. The poppet valve according to claim 9 wherein the first interlocking formation is connected to, or integrally formed with, the poppet (524).

11. The poppet valve according to claim 8 wherein the second damping mechanism comprises a third interlocking formation configured to interlock with a fourth interlocking formation when the poppet (524) is in the valve open position, the fourth interlocking formation being provided on the poppet rod (534) and/or the solenoid (126), the second damping mechanism being operable to damp the sliding movement of the poppet (524) guided by the poppet rod (534) by pushing hydraulic fluid from between the third and fourth interlocking formations through one or more of the damping channel(s).

12. The poppet valve according to claim 1, further comprising a third damping mechanism for damping a sliding movement of the poppet (524) guided by the poppet rod (534), the third damping mechanism being disposed between the poppet and a valve casing in which the valve is housed.

13. A poppet valve according to claim 12, wherein the third damping mechanism comprises one or more projections extending from the valve casing and/or the poppet (524) to form a damping channel between the valve casing and the poppet (524) when the poppet (524) moves towards the valve open and/or valve closed positions, the damping channel restricting a flow of hydraulic fluid, wherein the third damping mechanism is operable to damp the sliding movement of the poppet (524) guided by the poppet rod (534) by pushing hydraulic fluid from between the poppet (524) and the valve casing through the damping channel.

14. A poppet valve according to claim 13 wherein the valve casing and/or the poppet (524) further comprise one or more recesses arranged to increase the width of the damping channel at an intermediate position of the poppet (524) between the valve open and valve closed positions, thereby decreasing the level of damping provided by the damping channel at said intermediate position.

15. A poppet valve according to claim 1 wherein said one or more damping channels (550, 551, 552, 553) further include a second hole (552, 553) provided at the sleeve (547), wherein said second hole (552, 553) is configured not to be covered by the piston when the poppet (524) is in the valve open position or the valve closed position, wherein a flow path width of the first hole is wider than that of the second hole (or slot).

16. A poppet valve according to claim 15 wherein the cavity is provided within the sleeve (547).

17. A wind turbine generator comprising:
a hub on which a blade is mounted;
a main shaft which is connected to the hub;
a hydraulic pump (10) which is attached to the main shaft;
a hydraulic motor (14) which is driven by pressurized oil supplied from the hydraulic pump (10) ; and
a generator (4) which is coupled to the hydraulic motor (14),
wherein at least one of the hydraulic pump (10) and the hydraulic generator is a fluid working machine comprising a poppet valve according to claim 1.

## Patentansprüche

1. Kegelventil (500), umfassend:
mindestens einen Ventilkörper (138), der mindestens einen Ventilsitz (140) umfasst;
mindestens einen Ventilkegel (524), der auf einem Kegelstab (534) zwischen einer offenen Ventilstellung und einer geschlossenen Ventilstellung verschiebbar ist, wobei der Ventilkegel (524) in den Ventilsitz (140) entlang einer oder mehrerer Abdichtlinien (152a, 152b) in der geschlossenen Ventilstellung dichtend eingreift und wobei sich der Ventilkegel (524) in der offenen Ventilstellung in einem Abstand von dem Ventilsitz befindet;
einen Vorspannmechanismus (132) zum Vorspannen des Ventilkegels (524) in Richtung auf die offene oder geschlossene Ventilstellung; und
ein Solenoid (126) zum Betätigen des Ventilkegels (524) gegen die Vorspannung des Vorspannmechanismus (132), wobei das Solenoid (126) mit dem Ventilkörper (138) verbunden ist;
wobei der Kegelstab (534) ein erstes Ende (145) und ein dem ersten Ende (145) entgegengesetztes zweites Ende (148) umfasst, wobei das erste Ende (145) fest an den Ventilkörper (138) montiert ist, sodass es sich im Wesentlichen senkrecht von dem Ventilkörper (138) in Bezug auf eine Ebene erstreckt, die durch mindestens eine der Abdichtlinien (152a, 152b) definiert wird, wobei das zweite Ende (148) des Kegelstabs (534) nicht fest montiert ist, sodass die Rechtwinkligkeit des Stabs vor dem Verbinden des Solenoids (126) mit dem Ventilsitz (140) messbar ist und sodass die Rechtwinkligkeit des Kegelstabs (534) im Wesentlichen nicht durch das Verbinden und/oder Ablösen des Solenoids (126) mit und/oder von dem Ventilsitz (140) beeinträchtigt wird,
wobei der Ventilkegel (524) eine Hülse (547) umfasst und wobei sich der Kegelstab (534) mindestens durch einen Teil der Hülse (547) erstreckt,
**dadurch gekennzeichnet, dass** eine von dem Kegelstab (534) geführte Gleitbewegung des Ventilkegels (524) durch einen ersten Dämpfungsmechanismus zwischen dem Kegelstab (534) und der Hülse (547) gedämpft wird, und dass die Hülse (547) so konfiguriert ist, dass sie auf dem Kegelstab (534) verschiebbar ist,
wobei der erste Dämpfungsmechanismus einen Kolben (502) umfasst, der geeignet ist, um sich in einem Hohlraum (575) hin- und herzubewegen, der einen oder mehrere Dämpfungskanäle (550, 551, 552, 553) umfasst, sodass, wenn sich der Kolben (502) in dem Hohlraum (575) hin- und herbewegt, eine Hydraulikflüssigkeit durch einen oder mehrere des einen oder der mehreren Dämpfungskanäle (550, 551, 552, 553) in den Hohlraum (575) gezogen oder aus diesem ausgestoßen wird, um die Gleitbewegung des Ventilkegels (524) zu dämpfen,
und wobei der eine oder die mehreren Dämpfungskanäle (550, 551, 552, 553) erste Öffnungen (552, 553) aufweisen, die an der Hülse (547) bereitgestellt werden,
und wobei die ersten Öffnungen (552, 553) nicht abgedeckt sind, wenn sich der Ventilkegel (524) in einer Zwischenstufe zwischen der offenen Ventilstellung und der geschlossenen Ventilstellung befindet, und wobei die erste Öffnung (552, 553) abgedeckt wird, wenn sich der Ventilkegel (524) in der offenen Ventilstellung oder der geschlossenen Ventilstellung befindet.

2. Kegelventil nach Anspruch 1, wobei der Ventilsitz (140) ein ringförmiges Ventilsitzelement umfasst.

3. Kegelventil nach Anspruch 2, wobei der Ventilsitz außerdem mindestens einen Abschnitt eines zentralen Stegs (144) umfasst, der in einem Ringraum des Ventilsitzelements (140) bereitgestellt wird und einen Teil des Ventilkörpers (138) bildet.

4. Kegelventil nach Anspruch 3, wobei der Ventilkegel eine kreisförmige Dichtung umfasst, die sowohl in das Ventilsitzelement (140) als auch den zentralen Steg (144) dichtend eingreift, wenn sich der Ventilkegel in der geschlossenen Ventilstellung befindet.

5. Kegelventil nach Anspruch 3, wobei der Kegelstab (534) fest an den zentralen Steg (144) montiert ist.

6. Kegelventil nach Anspruch 1, wobei der erste Dämpfungsmechanismus geeignet ist, den Dämpfungsgrad zu vergrößern, der auf die Gleitbewegung des Ventilkegels (524) angewandt wird, wenn er sich dem Solenoid (126) und/oder dem Ventilsitz (140) nähert, wenn sich der Ventilkegel (524) aus der geschlossenen Ventilstellung in die offene Ventilstellung bzw. aus der offenen Ventilstellung in die geschlossene Ventilstellung bewegt.

7. Kegelventil nach Anspruch 1, das außerdem einen zweiten Dämpfungsmechanismus umfasst, der zwischen dem Ventilkegel (524) und dem Ventilstab (534) und/oder dem Ventilkörper (138) bereitgestellt wird.

8. Kegelventil nach Anspruch 7, wobei der zweite Dämpfungsmechanismus funktioniert, indem eine Hydraulikflüssigkeit aus dem Zwischenraum zwischen dem Ventilkegel (524) und dem Kegelstab (534) und/oder dem Ventilkörper (138) durch einen oder mehrere Dämpfungskanäle gedrückt wird, wobei der Dämpfungskanal (die Dämpfungskanäle) die Strömung der Hydraulikflüssigkeit einschränkt (einschränken), was verursacht, dass die Gleitbewegung des Ventilkegels (524) entlang des Kegelstabs (534) gedämpft wird.

9. Kegelventil nach Anspruch 8, wobei der zweite Dämpfungsmechanismus eine erste Verriegelungsformation umfasst, die konfiguriert ist, um mit einer zweiten Verriegelungsformation verriegelt zu werden, wenn sich der Ventilkegel (524) in der geschlossenen Ventilstellung befindet, wobei die zweite Verriegelungsformation auf dem Kegelstab (534) und/oder dem Ventilkörper (138) bereitgestellt wird, wobei der zweite Dämpfungsmechanismus geeignet ist, um die Gleitbewegung des von dem Ventilstab (534) geführten Ventilkegels (524) zu dämpfen, indem die Hydraulikflüssigkeit durch einen oder mehrere der Dämpfungskanäle aus dem Zwischenraum zwischen der ersten und der zweiten Verriegelungsformation gedrückt wird.

10. Kegelventil nach Anspruch 9, wobei die erste Verriegelungsformation mit dem Ventilkegel (524) verbunden ist oder einen integralen Bestandteil davon bildet.

11. Kegelventil nach Anspruch 8, wobei der zweite Dämpfungsmechanismus eine dritte Verriegelungsformation umfasst, die konfiguriert ist, um mit einer vierten Verriegelungsformation verriegelt zu werden, wenn sich der Ventilkegel (524) in der offenen Ventilstellung befindet, wobei die vierte Verriegelungsformation an dem Kegelstab (534) und/oder dem Solenoid (126) bereitgestellt wird, wobei der zweite Dämpfungsmechanismus geeignet ist, um die Gleitbewegung des von dem Ventilstab (534) geführten Ventilkegels (524) zu dämpfen, indem die Hydraulikflüssigkeit durch einen oder mehrere der Dämpfungskanäle aus dem Zwischenraum zwischen der dritten und der vierten Verriegelungsformation gedrückt wird.

12. Kegelventil nach Anspruch 1, das außerdem einen dritten Dämpfungsmechanismus zum Dämpfen einer Gleitbewegung des von dem Ventilstab (534) geführten Ventilkegels (524) umfasst, wobei der dritte Dämpfungsmechanismus zwischen dem Ventilkegel und einem Ventilgehäuse angeordnet ist, in dem das Ventil untergebracht ist.

13. Kegelventil nach Anspruch 12, wobei der dritte Dämpfungsmechanismus einen oder mehrere Vorsprünge umfasst, die sich von dem Ventilgehäuse und/oder dem Ventilkegel (524) erstrecken, um einen Dämpfungskanal zwischen dem Ventilgehäuse und/oder dem Ventilkegel (524) zu bilden, wenn sich der Ventilkegel (524) in Richtung auf die offene und/oder die geschlossene Ventilstellung bewegt, wobei der Dämpfungskanal eine Strömung der Hydraulikflüssigkeit einschränkt, wobei der dritte Dämpfungsmechanismus geeignet ist, um die Gleitbewegung des von dem Ventilstab (534) geführten Ventilkegels (524) zu dämpfen, indem die Hydraulikflüssigkeit durch den Dämpfungskanal aus dem Zwischenraum zwischen dem Ventilkegel (524) und dem Ventilgehäuse gedrückt wird.

14. Kegelventil nach Anspruch 13, wobei das Ventilgehäuse und/oder der Ventilkegel (524) außerdem eine oder mehrere Vertiefungen umfasst, die angeordnet sind, um die Breite des Dämpfungskanals in einer Zwischenstellung des Ventilkegels (524) zwischen der offenen und der geschlossenen Ventilstellung zu vergrößern, wodurch der Dämpfungsgrad verringert wird, der durch den Dämpfungskanal in der Zwischenstellung bereitgestellt wird.

15. Kegelventil nach Anspruch 1, wobei der eine oder die mehreren Dämpfungskanäle (550, 551, 552, 553) außerdem eine zweite Öffnung (552, 553) aufweisen, die an der Hülse (547) bereitgestellt wird, wobei die zweite Öffnung (552, 553) so konfiguriert ist, dass sie nicht durch den Kolben abgedeckt wird, wenn sich der Ventilkegel (524) in der offenen Ventilstellung oder in der geschlossenen Ventilstellung befindet, wobei eine Strömungsbahnbreite der ersten Öffnung breiter als diejenige der zweiten Öffnung (oder des zweiten Spalts) ist.

16. Kegelventil nach Anspruch 15, wobei der Hohlraum in der Hülse (547) bereitgestellt wird.

17. Windenergieanlagengenerator, umfassend:
eine Nabe, an die ein Rotorblatt montiert ist;
eine Hauptwelle, die mit der Nabe verbunden ist;
eine Hydraulikpumpe (10), die an der Hauptwelle befestigt ist;
einen Hydraulikmotor (14), der durch Drucköl angetrieben wird, das von der Hydraulikpumpe (10) geliefert wird; und
einen Generator (4), der mit dem Hydraulikmotor verbunden ist,
wobei mindestens einer der Hydraulikpumpe (10) und des Hydraulikmotors eine flüssigkeitsgetriebene Arbeitsmaschine ist, die ein Kegelventil nach Anspruch 1 umfasst.

## Revendications

1. Soupape à champignon (500), comprenant:
au moins un corps de soupape (138) comprenant au moins un siège de soupape (140);
au moins un champignon (524) qui peut coulisser sur une tige de champignon (534) entre une position ouverte de la soupape et une position fermée de la soupape, le champignon (524) engageant de façon étanche le siège de soupape (140) le long d'une ou de plusieurs ligne(s) d'étanchéité (152a, 152b) à la position fermée de la soupape, et le champignon (524) étant espacé du siège de soupape à la position ouverte de la soupape;
un mécanisme de poussée (132) pour pousser le champignon (524) en direction de la position ouverte de la soupape ou de la position fermée de la soupape; et
un solénoïde (126) pour actionner le champignon (524) contre la poussée du mécanisme de poussée (132), le solénoïde (126) étant couplé au corps de soupape (138) ;
dans laquelle la tige de champignon (534) comprend une première extrémité (145) et une seconde extrémité (148) opposée à la première extrémité (145), la première extrémité (145) étant montée de façon rigide sur le corps de soupape (138) de telle sorte qu'il s'étende de façon sensiblement perpendiculaire à partir du corps de soupape (138) par rapport à un plan défini par au moins une desdites lignes d'étanchéité (152a, 152b), la seconde extrémité (148) de la tige de champignon (534) n'étant pas montée de façon rigide de telle sorte que la perpendicularité de la tige soit mesurable avant le couplage du solénoïde (126) au siège de soupape (140) et que la perpendicularité de la tige de champignon (534) ne soit sensiblement pas affectée par le couplage et/ou le découplage du solénoïde (126) au et/ou du siège de soupape (140),
dans laquelle le champignon (524) comprend un manchon (547) et la tige de champignon (534) s'étend à travers au moins une partie du manchon (547),
**caractérisée en ce qu'**un mouvement coulissant du champignon (524) guidé par la tige de champignon (534) est amorti par un premier mécanisme d'amortissement entre la tige de champignon (534) et le manchon (547) configuré de manière à pouvoir coulisser sur la tige de champignon (534), dans laquelle le premier mécanisme d'amortissement comprend un piston (502) actionnable pour exécuter un déplacement alternatif à l'intérieur d'une cavité (575) comprenant un ou plusieurs canaux d'amortissement (550, 551, 552, 553) de telle sorte que, lorsque le piston (502) va et vient à l'intérieur de la cavité (575), un fluide hydraulique soit aspiré dans ou expulsé hors de la cavité (575) par l'intermédiaire d'un ou de plusieurs desdits un ou plusieurs canaux d'amortissement (550, 551, 552, 553) afin d'amortir le mouvement coulissant du champignon (524),
et lesdits un ou plusieurs canaux d'amortissement (550, 551 552, 553) comporte(nt) des premiers trous (552, 553) prévus au niveau du manchon (547),
et lesdits premiers trous (552, 553) sont découverts lorsque le champignon (524) se trouve dans une position intermédiaire entre la position ouverte de la soupape et la position fermée de la soupape, et ledit premier trou (552, 553) est couvert lorsque le champignon (524) se trouve dans la position ouverte de la soupape ou dans la position fermée de la soupape.

2. Soupape à champignon selon la revendication 1, dans laquelle le siège de soupape (140) comprend un élément de siège de soupape annulaire.

3. Soupape à champignon selon la revendication 2, dans laquelle le siège de soupape comprend en outre au moins une partie d'un méplat central (144) prévu dans un anneau de l'élément de siège de soupape (140) et qui fait partie du corps de soupape (138).

4. Soupape à champignon selon la revendication 3, dans laquelle le champignon comprend un joint annulaire qui engage de façon étanche à la fois l'élément de siège de soupape (140) et le méplat central (144) lorsque le champignon se trouve dans la position fermée de la soupape.

5. Soupape à champignon selon la revendication 3, dans laquelle la tige de champignon (534) est montée de façon rigide sur le méplat central (144).

6. Soupape à champignon selon la revendication 1, dans laquelle le premier mécanisme d'amortissement est actionnable pour augmenter le niveau d'amortissement qui est appliqué au mouvement coulissant du champignon (524) lorsque celui s'approche du solénoïde (126) et/ou du siège de soupape (140) lorsque le champignon (524) se déplace à partir de la position fermée de la soupape jusqu'à la position ouverte de la soupape et/ou à partir de la position ouverte de la soupape jusqu'à la position fermée de la soupape, respectivement.

7. Soupape à champignon selon la revendication 1, comprenant en outre un deuxième mécanisme d'amortissement prévu entre le champignon (524) et la tige de champignon (534) et/ou le corps de soupape (138).

8. Soupape à champignon selon la revendication 7, dans laquelle le deuxième mécanisme d'amortissement agit en poussant un fluide hydraulique depuis entre le champignon (524) et la tige de champignon (534) et/ou le corps de soupape (138) à travers un ou plusieurs canaux d'amortissement, le ou les canaux d'amortissement empêchant l'écoulement de fluide hydraulique qui entraîne l'amortissement du mouvement coulissant du champignon (524) le long de la tige de champignon (534).

9. Soupape à champignon selon la revendication 8, dans laquelle le deuxième mécanisme d'amortissement comprend une première formation de verrouillage mutuel configurée de manière à se verrouiller avec une deuxième formation de verrouillage mutuel lorsque le champignon (524) se trouve dans la position fermée de la soupape, la deuxième formation de verrouillage mutuel étant prévue sur la tige de champignon (534) et/ou le corps de soupape (138), le deuxième mécanisme d'amortissement étant actionnable pour amortir le mouvement coulissant du champignon (524) guidé par la tige de champignon (534) en poussant un fluide hydraulique depuis entre les première et deuxième formations de verrouillage mutuel à travers un ou plusieurs des canaux d'amortissement.

10. Soupape à champignon selon la revendication 9, dans laquelle la première formation de verrouillage mutuel est connectée au ou est intégralement formée avec le champignon (524).

11. Soupape à champignon selon la revendication 8, dans laquelle le deuxième mécanisme d'amortissement comprend une troisième formation de verrouillage mutuel configurée de manière à se verrouiller avec une quatrième formation de verrouillage mutuel lorsque le champignon (524) se trouve dans la position ouverte de la soupape, la quatrième formation de verrouillage mutuel étant prévue sur la tige de champignon (534) et/ou le solénoïde (126), le deuxième mécanisme d'amortissement étant actionnable pour amortir le mouvement coulissant du champignon (524) guidé par la tige de champignon (534) en poussant un fluide hydraulique depuis entre les troisième et quatrième formations de verrouillage mutuel à travers un ou plusieurs des canaux d'amortissement.

12. Soupape à champignon selon la revendication 1, comprenant en outre un troisième mécanisme d'amortissement pour amortir un mouvement coulissant du champignon (524) guidé par la tige de champignon (534), le troisième mécanisme d'amortissement étant disposé entre le champignon et une enceinte de soupape dans laquelle la soupape est logée.

13. Soupape à champignon selon la revendication 12, dans laquelle le troisième mécanisme d'amortissement comporte une ou plusieurs saillie(s) qui s'étende(nt) à partir de l'enceinte de soupape et/ou du champignon (524) de manière à former un canal d'amortissement entre l'enceinte de soupape et le champignon (524) lorsque le champignon (524) se déplace en direction de la position ouverte de la soupape et/ou de la position fermée de la soupape, le canal d'amortissement empêchant un écoulement de fluide hydraulique, dans laquelle le troisième mécanisme d'amortissement est actionnable pour amortir le mouvement coulissant du champignon (524) guidé par la tige de champignon (534) en poussant un fluide hydraulique depuis entre le champignon (524) et l'enceinte de soupape à travers le canal d'amortissement.

14. Soupape à champignon selon la revendication 13, dans laquelle l'enceinte de soupape et/ou le champignon (524) comporte(nt) en outre un ou plusieurs évidement(s) agencé(s) de manière à augmenter la largeur du canal d'amortissement à une position intermédiaire du champignon (524) entre la position ouverte de la soupape et la position fermée de la soupape, diminuant de ce fait le niveau d'amortissement appliqué par le canal d'amortissement à ladite position intermédiaire.

15. Soupape à champignon selon la revendication 11, dans laquelle lesdits un ou plusieurs canaux d'amortissement (550, 551, 552, 553) comporte(nt) en outre un second trou (552, 553) prévu au niveau du manchon (547), dans laquelle ledit second trou (552, 553) est configuré de manière à ne pas être couvert par le piston lorsque le champignon (524) se trouve dans la position ouverte de la soupape ou dans la position fermée de la soupape, dans laquelle une largeur de chemin d'écoulement du premier trou est plus grande que celle du second trou (ou fente).

16. Soupape à champignon selon la revendication 15, dans laquelle la cavité est prévue à l'intérieur du manchon (547).

17. Générateur d'éolienne, comprenant:
un moyeu sur lequel une aube est montée;
un arbre principal qui est connecté au moyeu;
une pompe hydraulique (10) qui est attachée à l'arbre principal;
un moteur hydraulique (14) qui est entraîné par de l'huile sous pression fournie par la pompe hydraulique (10); et
un générateur (4) qui est couplé au moteur hydraulique (14),
dans laquelle au moins un parmi la pompe hydraulique (10) et le générateur hydraulique est une machine de travail fluidique comprenant une soupape à champignon selon la revendication 1.
